(19) Europäisches Patentamt

European Patent Office

Office européen des brevets

(11) **EP 0 749 230 B1**

(12) **EUROPEAN PATENT SPECIFICATION**

(45) Date of publication and mention
of the grant of the patent:
**19.04.2000 Bulletin 2000/16**

(51) Int Cl.[7]: **H04N 1/327**, G06F 17/15,
H04Q 1/46

(21) Application number: **96401303.1**

(22) Date of filing: **14.06.1996**

(54) **Method and device for detecting the presence of a periodic signal in a set of signals**

Verfahren und Vorrichtung zum Nachweis der Anwesenheit eines periodischen Signals in einem Satz von Signalen

Procédé et dispositif pour détecter la présence d'un signal périodique dans un ensemble de signaux

(84) Designated Contracting States:
**DE FR GB**

(30) Priority: **15.06.1995 FR 9507154**

(43) Date of publication of application:
**18.12.1996 Bulletin 1996/51**

(73) Proprietor: **CANON RESEARCH CENTRE-FRANCE S.A.**
**35517 Cesson Sevigne Cedex (FR)**

(72) Inventors:
 • **Delumeau, François**
 **35000 Rennes (FR)**
 • **Fujise, Shun-ichi**
 **35000 Rennes (FR)**
 • **Piret, Philippe**
 **35510 Cesson-Sevigne (FR)**

(74) Representative: **Rinuy, Santarelli**
 **14, avenue de la Grande Armée**
 **75017 Paris (FR)**

(56) References cited:
 **EP-A- 0 515 685      EP-A- 0 595 483**
 **US-A- 4 312 074      US-A- 4 490 831**
 **US-A- 5 343 420**

**Description**

The present invention relates to a method and device for detecting the presence of a periodic signal in the presence of noise. More particularly the present invention relates to the detection of a periodic signal amongst a set of signals, the said signal having a periodic repetition of at least one frequency during at least one predetermined duration, the said frequency, the repetition period and the duration being given respective predetermined tolerances.

The present invention has a preferred use in the field of telecommunications where it is necessary to recognise the presence of a signal occurring, in particular, in an emitter identification procedure, before a communication, whether the signal is or is not superimposed on random signals and/or noise.

This type of procedure occurs in particular in the case of telecommunication devices such as facsimile machines, where the signal to be recognised is called a CNG, the latter having noise added by the human voice or, more generally, by signals transmitted on the line under circumstances described hereafter.

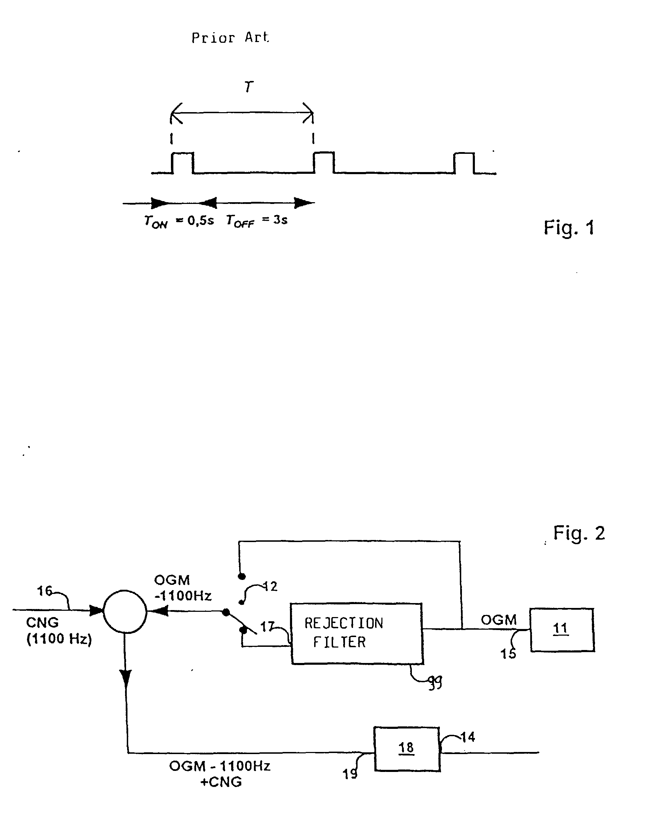

The CNG, which is shown in Figure 1, is defined by Figure 15 of the T30 standard of the ITU-T. It is a signal emitted in the pass-band of vocal frequencies making it possible to detect if a call received originates from a facsimile machine. It is a signal constituted by amplitude modulation of a carrier (1100 Hz) by the envelope, shown in Figure 1. This envelope occurs in the form of a periodic square signal determining the periodic duration of transmission $T_{ON}$ of the carrier (0.5 s) and the periodic duration of "silence" $T_{OFF}$ (3 s), the period $T$ of the square signal thus being 3.5 s.

In accordance with the standard of the ITU-T mentioned above, the CNG is affected by two relevant tolerances:

-    on the one hand relating to the carrier: its frequency may have a value within the range 1062 to 1138 Hz,
-    on the other hand relating to the envelope: the period $T$ of the square signal may vary by 15% (a tolerance called hereinafter $d$T) and the CNG may therefore have a tolerated period in the range between 2.975 seconds (in other words: $T_{MIN}$ $T$ = - $dT$) and 4.025 seconds (in other words: $T_{MAX}$ = $T$ + $d$T); this 15% tolerance applies to both the duration $T_{ON}$ and the duration $T_{OFF}$ ($dT_{ON}$ and ($dT_{OFF}$) respectively). It will also be observed that the tolerance $dT_{OFF}$ has a relatively large value because it is 0.45 seconds, in other words of about the same size as the duration $T_{ON}$.

In the field of facsimile machines, there are devices connected to the telephone line able to switch to a telephone call reception mode or to a facsimile machine mode. Selection of the operating mode of the device is performed on detection of a signal called CNG transmitted on the telephone line by the calling facsimile machine. In the case where the device receiving the call employs functions of a telephone answering machine and switchable facsimile machine/telephone features, it should, on the reception of a call, detect the possible presence of a CNG signal within a delay of 9 seconds (in the case of category 2 facsimile machines, according to the French standard M 45-20 A of April 1992) whilst sending a voice message from the answering machine (OGM). Because of this the CNG signal is mixed with the voice message from the answering machine and its detection is made difficult.

In fact, to the extent that the frequency of the CNG (1100 Hz) is located in the middle of the vocal frequency band (300 Hz, 3400 Hz), its detection becomes difficult when it is mixed with a voice message from the answering machine comprising a high proportion of signals (called "parasitic") containing frequency components in the range between 1062 and 1138 Hz.

In the state of the art, a device capable of detecting the CNG signal when the latter is mixed in a set of signals is known from patent US-A-5 185 783. Such a device comprises a filter able to select solely the frequency 1100 Hz (modified by its tolerances) from a set of signals transmitted on the telephone line containing a CNG type signal mixed with other signals. The signal at the output of the filter is sampled. The samples are processed as soon as they are received. By counting the latter an attempt is made to determine the occurrence of a period $T_{ON}$ and then that of a period $T_{OFF}$, taking into account their tolerances. The CNG signal is validated when a period $T_{OFF}$ and a $T_{ON}$ period have been detected.

This method is not satisfactory in all hypothetical cases and the inventors have noticed, in particular, the following disadvantages:

-    the method is very sensitive to parasitic signals having a frequency of 1062 - 1138 Hz, occurring during the period $T_{OFF}$. In the case where these signals are too numerous, the $T_{OFF}$ period is not recognised,
-    in the case of not recognised samples, such as those belonging to a $T_{ON}$ or $T_{OFF}$ period, the information contained in the said samples, although it may be significant, is lost. This results, at the least, in a delay in the detection of the CNG signal, there being a risk of this not occurring during the assigned 9 seconds delay,
-    in short, this method is too sensitive to parasitic signals comprising components with a frequency of 1062 - 1138 Hz and it conceals a not insignificant risk of not allowing detection of a CNG when the latter is mixed with a voice message of the answering machine (OGM) containing a high level of parasitic signals having a frequency of 1062 - 1138 Hz.

Another device, shown in a simplified manner in Figure 2, is also known. This device comprises a rejection filter 99 connected to the output of a telephone answering machine 11. The output 15 of the telephone answering machine 11 is also connected to a switch 12 allowing short-circuiting of the rejection filter 99. The rejection filter makes it possible to remove $1100 \pm 38$ Hz frequencies from the OGM voice message emitted by the answering machine. The input of the telephone line 16 is connected, on the one hand, to one terminal of the switch 12 the second terminal of which is connected to the output 17 of the band rejection filter 99 and, on the other hand to a filter 18 for detecting 1062 - 1138 Hz frequencies centred on 1100 Hz.

During the 9 seconds (at the most) during which the detection of the CNG possibly present in the signal arriving through the telephone line 16 should be performed, the input 19 of the circuit 18 may receive the following signals:

- a signal which does not contain the $1100 \pm 38$ Hz frequencies, in which case the signal at the output 14 of the detection filter 18 is at a first level, and
- a signal containing components having frequencies of $1100 \pm 38$ Hz, in which case the signal at the output 14 is at a second level. In the latter case this means that the incoming signal is a CNG, because, as long as the switch 12 remains in the open position, only those 1100 Hz components coming from the line can be detected by the filter 18.

If, at the end of 9 seconds the CNG has not been detected, the switch 12 is switched into the closed position so that the band rejection filter 99 is no longer active.

The disadvantage of this device is the degradation of the OGM voice message during the detection period, insofar as a wide frequency band of about 80 Hz centred on 1100 Hz is suppressed in the OGM signal. Another disadvantage relates to the fact that because this method requires dedicated components (a band rejection filter and an analogue switch), carrying out the process is more complicated and thus more expensive.

The object of the present invention is to provide a method and a device for detection of a periodic signal which overcomes the above disadvantages.

For this purpose the object of the invention is a method for detecting the presence of a periodic signal amongst a set of signals, the said signal having a periodic repetition of at least one frequency during at least one predetermined duration ($T_{ON}$), the said frequency, the period $T$ of the periodic repetition and the said duration ($T_{ON}$) being given respective predetermined tolerances ($dT$, $dT_{ON}$), including a step during which:

a) in a so-called "discrimination" phase, the said frequency is discriminated from the other frequencies of the set of signals by filtering means and an output signal is delivered at two levels representing respectively the presence or absence of the said frequency in the said set of signals,
b) in a so-called "sampling" phase, an origin for the times is fixed and from this the level thus obtained is sampled in $n$ signal samples,

the method being characterised in that in addition:

c) in a so-called "detection and weighting" phase the occurrence is located, on the time scale at instants $t_i$, of a series of successive samples $S_i$ of the same level corresponding to the presence of the said frequency, for which a so-called "weight" value $P_i$ representing the number of samples of the said level of the said series is calculated,
d) in a so-called "creation of a history" phase, for each series $S_i$, a value $Histo(j)$ representing the weight $P_i$ is projected in a first future time interval,
e) in a so-called "correlation" phase, if appropriate, an instantaneous degree of correlation ($Corr_j$) between the weight $P_j$, calculated for the series $S_j$ of the instant $t_j$, and the value $Histo(j)$, corresponding to the weight $P_i$ relating to the series $S_i$ located at $t_i$, is calculated,
f) in a so-called "decision" phase, the presence or absence of the signal is deduced in accordance with the said instantaneous correlation degrees.

Thanks to the employment of the above steps, the method of the invention makes possible easy detection of a repetitive periodic signal, the frequency and also the repetition period of which may vary within predetermined tolerances, it being possible for certain tolerances to have a relatively large value ($dT_{OFF}$).

This method allows reliable detection of a signal even when the latter is mixed with signals containing a high density of signals having frequencies in the same frequency band as the signal to be detected ("parasitic signals"). The method also has the advantage of not needing costly components as is the case in the aforementioned prior art (rejection filter, analogue switch). Furthermore it permits detection of the periodic signal without modification of the signal emitted by the answering machine (OGM).

In accordance with a second aspect of the invention:

- in the so-called "creation of a history" phase, during the first maximum period $T_{max}$, where $T_{max} = T + dT$, for each series $S_i$, in a first future time interval, a value $Histo(j)$ representing the weight $P_i$ is projected, and for each series $S_j$ located at the instant $t_j$ occurring after the elapse of the first maximum period $T_{max}$ after the time origin, in a second future time interval a value $Histo(k)$ representing $Histo(j)$ and $P_j$ is projected, and

- in the so-called "correlation" phase, if applicable, an instantaneous degree of correlation ($Corr_j$) between the weight $P_j$, calculated for the series $S_j$ of the instant $t_j$, and the value $Histo(j)$, corresponding to the weight $P_i$ relating to the series $S_i$, is calculated.

Thanks to these particularly favourable arrangements, the method in accordance with this aspect of the invention takes into account the historical information constituted by the weights determined during the first $T_{max}$ in the projection of weights relating to the series of samples $S_j$ determined during the second period. Thus the projection of large weights is avoided when the latter correspond to parasitic signals and not to the $T_{ON}$ part of the signal to be detected. The creation of the history of the first period therefore makes it possible, during the creation of the history of the second period, to eliminate some information belonging to parasitic signals, consequently making the calculation of the correlation and likewise the detection of the signal, more reliable.

In accordance with advantageous characteristics of this second aspect, the second future interval is included between $t_j + T - dT$ and $t_j + T + dT$ and the value $Histo(k)$ is equal to the minimum between $Histo(j)$ and $P_j$ at each instant $t_k$ in the second future interval to which a larger value has not been allocated previously.

This prevents even better the projection of large weights when the latter correspond to parasitic signals, and not to the $T_{ON}$ part of the signal to be detected.

According to other features of the invention, the $n$ signal samples obtained during the sampling phase extend over a duration equal to at least two maximum periods $T_{max}$, where $T_{max} = T + dT$, taking into account the said tolerance $dT$ relating to the period $T$.

Thanks to these arrangements, one is sure to obtain, if the signal to be detected is present, two complete series of samples corresponding to the said signal.

According to other features of the invention, the first future time intervals are included between $t_i + T - dT$ and $t_i + T + dT$.

This time interval comprises, in fact, the set of instants in which a series correlated with the series processed is liable to be located in its turn.

According to other features of the invention, the value $Histo(j)$ is obtained by giving it the value $P_i$ at each instant $t_j$ in this future interval to which a larger value has not been allocated previously.

Consequently the parasitic signals, usually of short duration relative to the representative series of the signal to be detected, are eliminated.

In a preferred method of employing the method in accordance with the invention, the weight value ($p$) of the consecutive series of samples of the level corresponding to the presence of the frequency of the signal to be detected is:

- a direct function of the number $l$ of samples in the said series if the said number $l$ is, on the one hand, less than the number of samples $ON_{max}$ which could be delivered during the said predetermined duration ($T_{ON}$) increased by its tolerance ($dT_{ON}$) and, on the other hand, greater than the number of samples $ON_{min}$ which could be delivered during the said predetermined duration ($T_{ON}$) minus its tolerance ($dT_{ON}$),
- a predetermined constant if the number $l$ is greater than the number of samples $ON_{max}$,
- a direct function of the number $l$ if the latter is less than the number of samples $ON_{min}$ and if the number $s$ of samples of a level representing the presence of a signal during the period $T_{ON} - dT_{ON}$ preceding the current instant is less than a predetermined limit number,
- a predetermined constant if the number $l$ is less than the number of samples which could be delivered in $T_{min}$ and if the number $s$ of samples of a level representing the presence of a signal during the period $T_{ON} - dT_{ON}$ preceding the current instant is greater than the said predetermined limit number.

Preferably the direct function allowing the weight to be calculated is:

$$P = l \cdot (l + 1)/2 \qquad (1)$$

Thanks to these arrangements the method takes into account:

- the case where a sequence of samples representing the presence of the signal to be detected in the set of signals is prolonged by parasitic signals: the weight is limited to the weight corresponding to a series of $ON_{max}$ samples,
- the case where the parasitic signals, because of a substantial phase difference, partially, at least, cancel the carrier of the signal to be detected during a period $T_{ON}$.

In the preferred method of employing the method according to the invention, during the decision phase to deduce the presence or absence of the signal to be detected, the degrees of instantaneous correlation ($Corr_j$) evaluated for the $n$ samples are added together, the total is compared with a predetermined threshold value and the presence or absence of a signal is deduced according to the result of this comparison.

These arrangements advantageously make it possible, by adding together the degrees of instantaneous correlation, to take into account the history of the signal during the sampling period. Because of this the result is significantly more reliable than if one is limited to considering the instantaneous degrees of correlation.

In the said preferred method of employment, prior to the said comparison, a measurement is made throughout the entire duration of the sampling of the proportion $\rho$ of samples representing the presence of a signal and a threshold value to be taken into consideration is selected as a function of the said measured proportion from a plurality of threshold values.

Thanks to these arrangements, the criterion for making a decision regarding the presence or absence of a signal to be detected is greatly improved.

In a preferred method for employing the procedure in accordance with the invention, for each series $S_j$ located at the instant $t_j$ arriving after the elapse of the first maximum period $T_{max}$ after the time origin, if the number $l$ of samples in the series $S_j$ in question is greater than the number of samples ($ON_{max}$) which could be generated in the said predetermined duration $T_{ON}$ increased by its tolerance ($dT_{ON}$), the said degree of instantaneous correlation is calculated by means of the formula:

$$Corr_j = P_j \cdot Max \{Histo [j - l + ON_{max}], ..., Histo[j]\} \tag{2}$$

These arrangements advantageously make it possible to take into account, for the calculation of the instantaneous correlation degree, the case where parasitic signals "prolong" a duration $T_{ON}$ of the signal to be detected.

In this embodiment, for each series $S_j$ located at the instant $t_j$ arriving after the elapse of the first maximum period $T_{max}$ after the time origin, if, on the one hand, the number $l$ of samples in the series $S_j$ in question is less than the number of samples ($ON_{max}$) which could be generated in the said predetermined duration $T_{ON}$ increased by its tolerance ($dT_{ON}$) and, on the other hand, if the number of samples $s$ of a level representing the presence of a signal during the period of duration ($T_{ON} - dT_{ON}$) preceding the current instant $t_j$ is greater than a predetermined threshold number, the said degree of instantaneous correlation is calculated by means of the formula:

$$Corr_j = P_j \cdot Max \{Histo [j - \Delta], ..., Histo[j]\} \tag{3}$$

where $\Delta$ is a predetermined shift.

These arrangements advantageously make it possible to take into account, for the calculation of the instantaneous correlation degree, the case where parasitic signals at least partially cancel out the signal during the duration of $T_{ON}$, which may also be prolonged by the parasitic signals.

The invention also covers an application of the method briefly described above to the control of switching means for a communications system, incorporating in particular telephone and facsimile functions, between a facsimile mode if the presence of a CNG signal is detected and a telephone communication mode in the contrary case.

The invention also has as an objective a device for detecting the presence of a periodic signal amongst a set of signals, the said signal having a periodic repetition of at least one frequency during at least one predetermined duration ($T_{ON}$), the said frequency, the repetition period $T$ and the said duration ($T_{ON}$) being given respective predetermined tolerances ($dT, dT_{ON}$), and the said device comprising:

- means for discriminating the said frequency from the other frequencies of the set of signals adapted to deliver an output signal at two levels respectively representing the presence or absence of the said frequency in the said set of signals, and
- sampling means adapted to sample the level thus obtained,

the said device being characterized in that it also comprises:

- processing means comprising in particular calculation and storage means adapted to:

. fix a time origin and control the sampling means in order to sample the signal output from the discrimination means so as to obtain $n$ output signal samples,

. locate on the time scale at instants $t_i$ the occurrence of a successive series of samples $S_i$ of the same level corresponding to the presence of the said frequency for which the processing means calculate a so-called "weight" value $P_i$ representing the number of values of the said level in the said series,

. for each series $S_i$, project in a first future time interval a value $Histo(j)$ representative of the weight $P_i$,

. evaluate, where applicable, a degree of instantaneous correlation ($Corr_j$) between the weight $P_j$ calculated for the series $S_j$ of instant $t_j$, and the value $Histo(j)$ corresponding to the weight $P_i$ relating to the series $S_i$ located at $t_i$, and

. deduce the presence or absence of a signal in accordance with the said instantaneous correlation degrees.

According to the second aspect of the device which is the object of the invention, the calculating and storage means are also adapted to:

. determine the end of a first maximum period $T_{max}$, where $T_{max} = T + dT$ and, during the latter, for each series $S_i$, project in a first future time interval a value $Histo(j)$ representing the weight $P_i$ and, for each series $S_j$ located at an instant $t_j$ occurring after the elapse of the first maximum period $T_{max}$ where $T_{max} = T + dT$ after the time origin, project in a second future time interval a value $Histo(k)$ representing $Histo(j)$ and $P_j$, and

. evaluate, where applicable, a degree of instantaneous correlation ($Corr_j$) between the weight $P_j$ calculated for the series $S_j$ of instant $t_j$, and the value $Histo(j)$ corresponding to the weight $P_i$ relating to the series $S_i$ located at $t_i$.

The device described has the advantages inherent in the detection method described succinctly above.

In addition, the processing means of the detection device are adapted to utilise the advantageous characteristics of the various methods of embodying the method outlined above.

Thanks to these arrangements, the various methods of employing the method in accordance with the invention briefly described above may easily be implemented, in particular in a facsimile machine or, more generally, in any telecommunication device. In practice the discrimination means may consist of an active analogue/logic filter of conventional design. Moreover, in the case of a facsimile machine, the logic means of the latter may advantageously be utilised to perform the steps of the process described above.

The present invention also encompasses a facsimile machine and, more generally, a telecommunication system advantageously incorporating a detection device as outlined above.

Other characteristics and advantages of the invention will emerge from the following description with the help of the accompanying drawings in which:

- Figures 1 and 2 have already been described,
- Figures 3a, 3b and 3c are schematic views illustrating a first embodiment of the method in accordance with the invention applied to the detection of a CNG signal not mixed with parasitic signals,
- Figure 4 is a schematic view of a set of signals comprising, on the one hand, the CNG and, on the other hand, parasitic signals having a frequency between 1062 and 1138 Hz, after filtering, sampling and reconstitution,
- Figures 5a to 5k represent the development of the "history" of the signal shown in Figure 4 during sampling,
- Figures 6 to 9 show portions of the signal processed in accordance with a preferred embodiment of the method in accordance with the invention,
- Figure 10a is a simplified diagram of a facsimile machine comprising a device in accordance with the invention,
- Figure 10b is a diagram of another preferred embodiment of a facsimile machine comprising, on the one hand, a device in accordance with the invention and, on the other hand, an internal answering machine,
- Figures 11a and 11b are simplified flow diagrams of the principal operating programs used respectively by the facsimile machine shown in Figure 10a and that in Figure 10b,
- Figures 12a and 12b show a flow diagram of a principal CNG detection routine operated in the facsimile machines shown in Figures 10a and 10b,
- Figure 12c is a flow diagram relating to a sub-routine for the creation of the history utilised by the principal routine shown in Figures 12a and 12b, and
- Figures 13a and 13b are diagrammatic Figures showing the organisation of the read only memory and the random access memory used in the devices shown in Figures 10a and 10b.

1. <u>General description of the method</u>

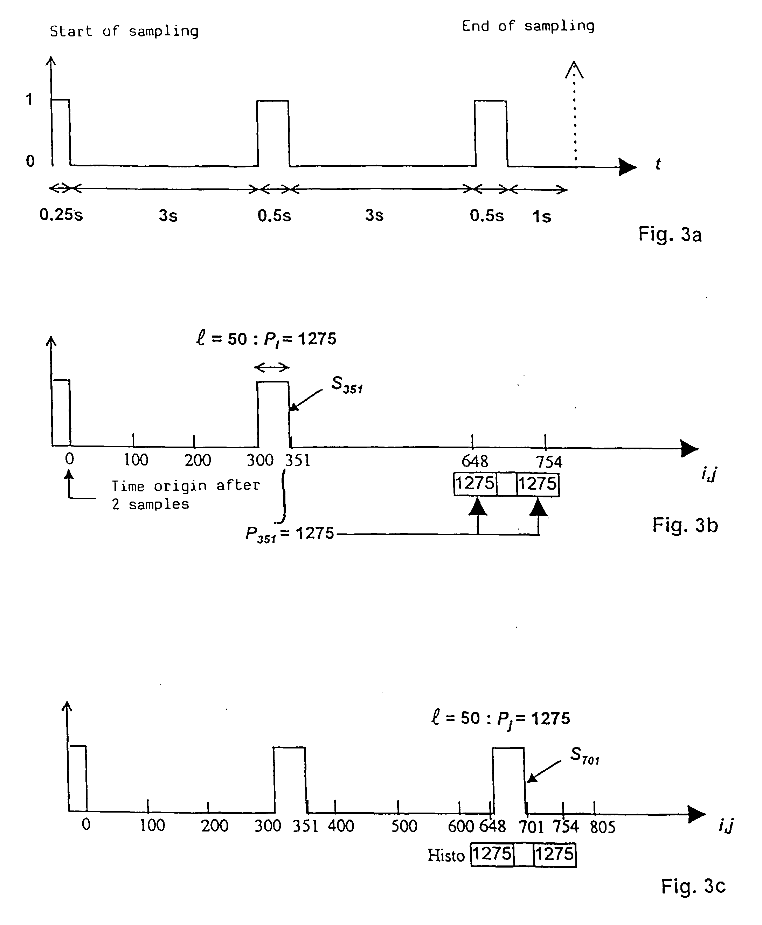

A first preferred manner of operating the method in accordance with the invention will now be described with reference to Figures 3a to 3c, 4 and 5a to 5k.

It will be recalled, first of all that, according to the invention, to detect the presence of a CNG the incoming signal is subjected to a discrimination operation, during the course of which the frequency of the carrier is discriminated from other frequencies in the set of incoming signals by filtering means, and an output signal is delivered at two levels representing respectively the presence (level "1") or absence (level "0") of the said frequency in the set of incoming signals.

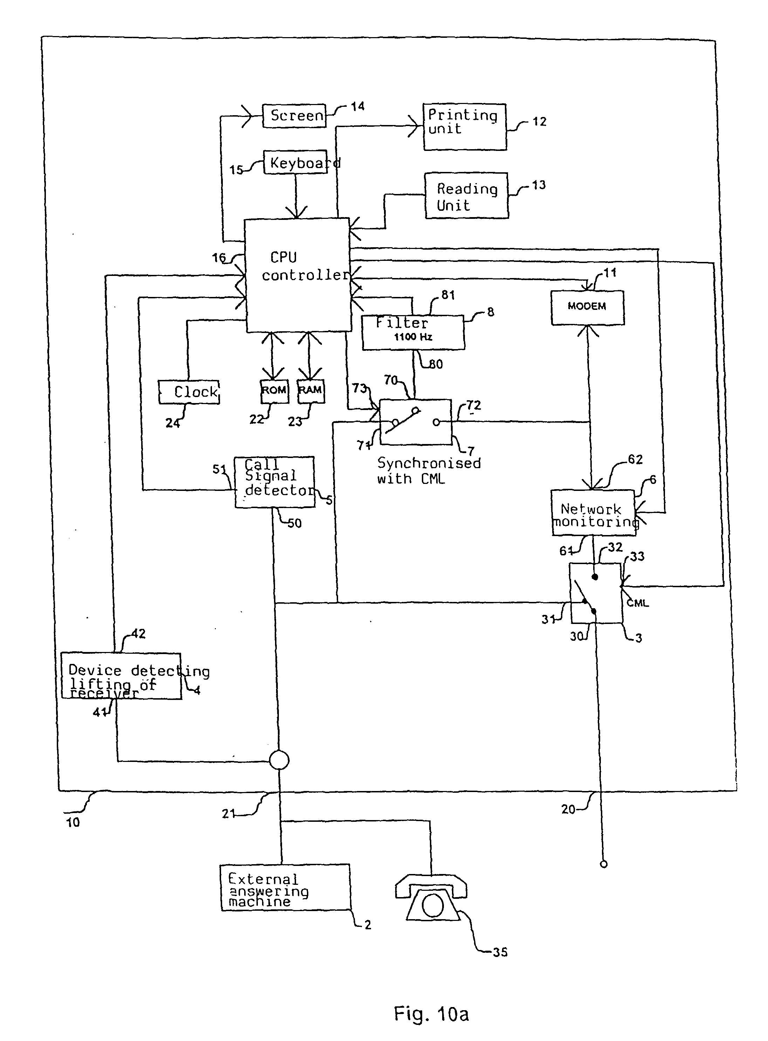

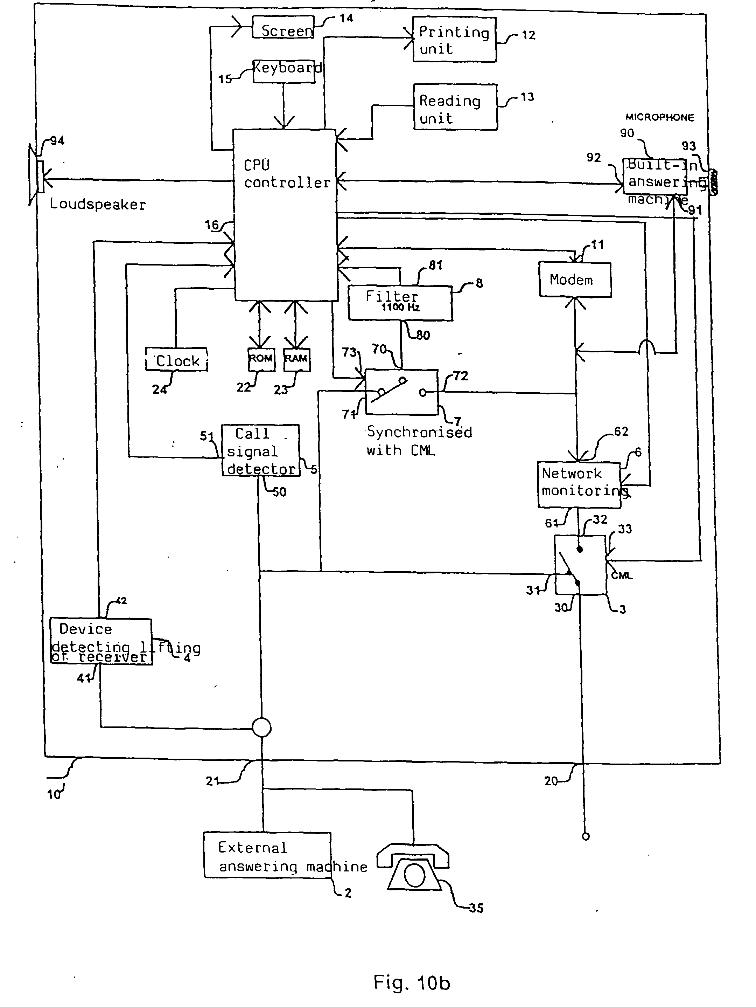

This operation is performed in this case by filtration means integrated in a facsimile machine which will be described below with reference to Figures 10a and 10b.

In accordance with the invention, detection of the CNG signal will be made by processing the output signal of the filtering means.

The subsequent phases of the method such as are employed in this case will be described first of all by explaining how a CNG signal not mixed with other signals is processed and detected as such. Figures 3a to 3c make it possible to easily understand the various aspects of the invention as it is employed in this case.

First of all, in a general manner, in a sampling phase a time origin is fixed and, starting from the latter, the level thus obtained is sampled in $n$ signal samples over a duration at least equal to two maximum periods $T_{max}$ where $T_{max} = T + dT$, which takes into account the tolerance $dT$ relating to the period $T$.

In the preferred embodiment of the present invention, the sampling is performed by the logic means which will be described below with reference to Figures 10a and 10b.

In this embodiment it will be recalled that the period $T$ of the CNG signal is 3.5 s, the tolerance $dT$ being equal to 525 ms. The minimal duration of sampling is therefore 8.05 s. In the present case the sampling duration chosen is the minimal duration of 8.05 s.

The frequency of sampling is selected to make it possible to obtain sufficient samples during the time period $T_{ON} - dT_{ON}$. In this case the sampling period is 10 ms, 805 samples therefore being taken over the entire duration of sampling.

The number of samples corresponding to the various durations which will be taken into consideration in the rest of the description are shown below:

| Duration concerned | Reference used for the number of samples | Number of samples in this embodiment |
|---|---|---|
| $T$ | $Z$ | 350 |
| $T_{ON}$ | $ON$ | 50 |
| $T_{OFF}$ | $OFF$ | 300 |
| $T_{ON} - dT_{ON}$ | $ON_{min}$ | 42 |
| $T_{ON} + dT_{ON}$ | $ON_{max}$ | 58 |
| $T_{max} = T + dT$ | $Z_{max}$ | 403 |
| $T_{min} = T - dT$ | $Z_{min}$ | 297 |
| $2T_{max}$ | $n$ | 805 |

For the rest of the description the time scale t will be replaced by the scale of samples numbered from 0 to $n$ = 805, the symbols $i$, $j$, and $k$ being used to number them.

According to a characteristic of the method of employing the method described in this case, to fix the time origin ($t_i$ where $i = 0$), the signal is sampled and the occurrence of a first predetermined number of successive samples with the level representing the absence of the carrier frequency (level "0") is awaited. This characteristic makes it possible to trigger the counting of samples whilst being almost certain that the counting will start during the $T_{OFF}$ time period. This characteristic makes it possible to make the result of the detection even more reliable.

In this embodiment the time origin, that is to say in this case the triggering of counting of the samples, is fixed as soon as two consecutive samples indicating the absence of the signal have been detected.

In Figure 3a the CNG signal is shown. In this example sampling has started during a $T_{ON}$ period, 0.25 seconds before the end of the latter. In accordance with the characteristic described above, to fix the time origin one waits until two samples with the level "0" have been detected. The time origin, that is to say in this case that of counting, is thus fixed retroactively to the first sample having the level "0", that is to say in this case after the transition to the output signal from the filtering means from the high level to the low level (transition shown in Figure 3b).

Once the time origin has been fixed, the method in accordance with the invention is concerned essentially with sequences of samples having the level "1". More specifically, in a so-called "detection and weighing" phase, after having located on the time scale at instants $t_i$ the occurrence of a series of samples $S_i$ with the level "1", a value $P_i$ called a "weight" is calculated representative of the number of samples of the said level.

Each series $S_i$ of samples of level "1" is characterized by its length, or in other words the number $l$ of samples of this same sequence. In this embodiment the weight value is a direct function of the number $l$ of samples of the series in question. More precisely the direct function making it possible to calculate the weight is in this case:

$$P = l \cdot (l + 1)/2 \qquad (1)$$

In the embodiment described here, the time origin having been fixed immediately after the first transition from the level "1" to the level "0" of the output signal from the filter, the first series of consecutive samples with the value 1 occurs between the samples $i = 301$ and $i = 350$. The series $S_{351}$ relating to this interval is located at the instant $t_i = t_{351}$ corresponding to the transition of the signal to the level "0".

Other ways of locating the occurrence of a series $S_i$ could be used, as for example the start of the series (in this example at the instant $t_i = 301$).

The application of the above formula gives for the series $S_{351}$:

$$P_{351} = 50(50 + 1)/2 = 1275 \qquad (4)$$

Then, in a general manner, according to a first aspect of the present invention, in a history creation phase, a $Histo(j)$ value equal to the weight $P_i$ is projected into a future time interval included between $t_i + T_{min}$, and $t_i + T_{max}$, allocating the $Histo(j)$ value to each instant $t_j$ which has not been allocated a higher value previously.

The projection is shown in Figure 3b.

First of all the instants $t_j$ comprised between $t_i + T_{min}$ and $t_i + T_{max}$ are considered. In this example, this interval is delimited by the instants 648 and 754, $j$ varying between these two values. In accordance with this aspect of the invention, a one dimensional table is constructed allocating a $Histo(j)$ value equal to the weight $P_i$ (here 1275) to each instant $t_j$ of the above-mentioned time interval.

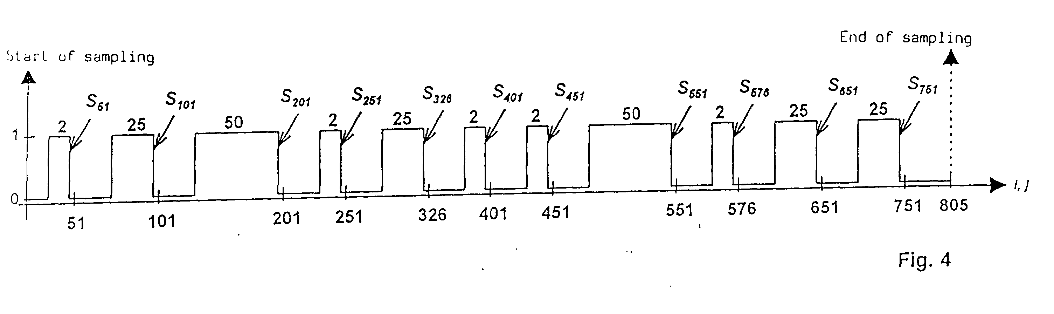

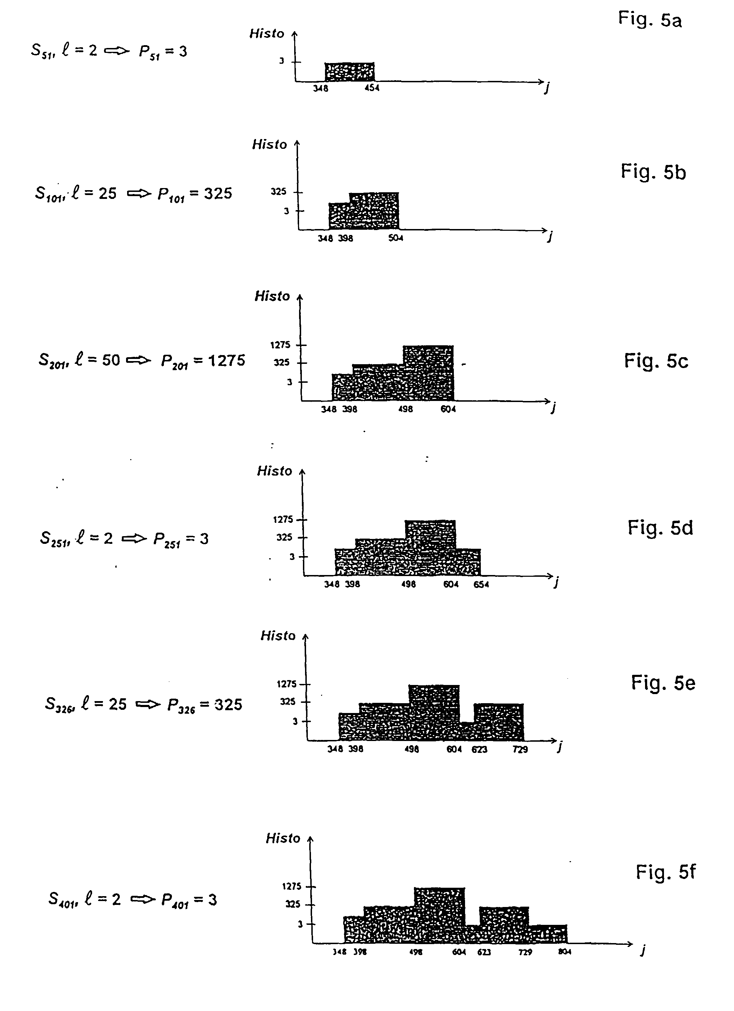

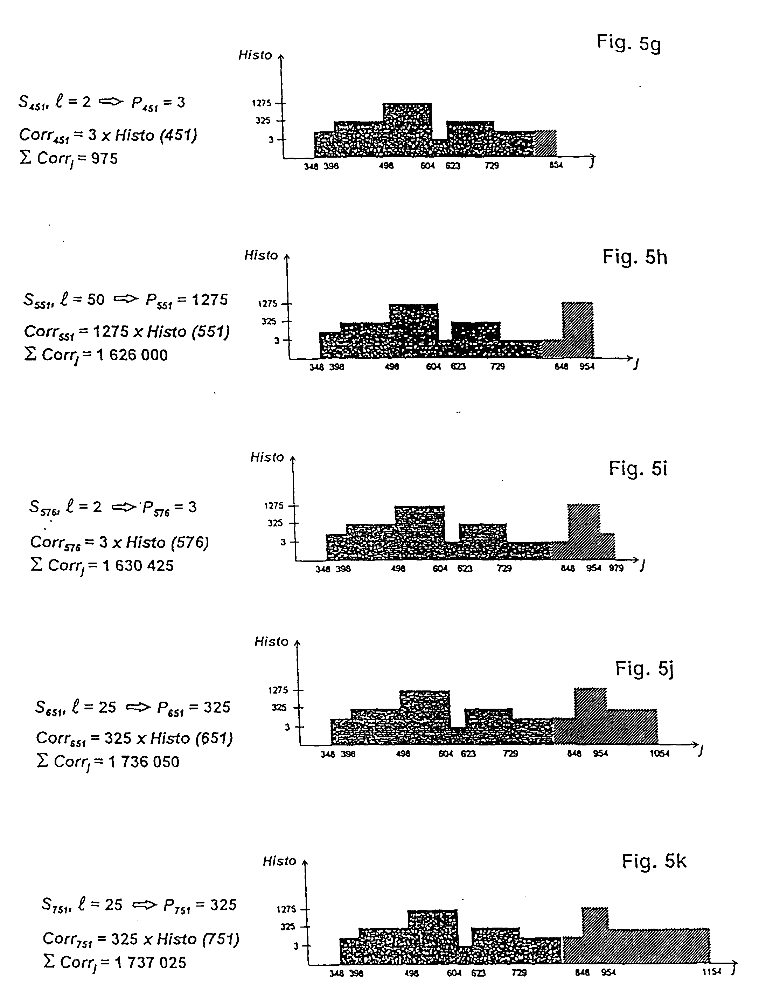

In the case in point, it being a pure CNG signal, that is to say not affected by parasitic signals, the future interval is "blank", that is to say it has not been possible to allocate any value whatsoever to the instants $t_j$ of this interval. However it would be possible (see the description of Figures 4 and 5a to 5k), in which case the highest value would be kept in the $Histo(j)$ table.

In the example shown in Figures 3a to 3c, it can be seen that the second duration $T_{ON}$ occurs between the instants 651 and 700. n accordance with the aspect of the invention mentioned above, the series $S_j$ corresponding to the second period $T_{ON}$ of the signal in Figure 3 is located at the sample $j = 701$ (that is to say in this case during the "future" period comprised between the instants $t_j = t_{648}$ and $t_j = t_{754}$), the weights $P_j$ being determined using the formula shown above $(P_j = 1275)$.

Then, in accordance with the invention, in a correlation phase, an instantaneous degree of correlation ($Corr_j$) between the weight $P_j$ is calculated, if applicable, for the series $S_j$ of the instant $t_j$ and the $Histo(j)$ value corresponding to the weight $P_i$ relating to the series $S_i$ of the preceding period located at $t_i$.

In this embodiment the degree of correlation is obtained by using the formula:

$$Corr_j = P_j \cdot Histo(j) \qquad (5)$$

In reality it is necessary here to obtain the product of the value of the weight determined at the instant $t_j$ where $j = 701$ and the history value at the same instant, this value is:

$$Corr_{701} = 1275 \times 1275 = 1,625,625 \qquad (6)$$

Finally, in accordance with the invention, in a decision phase, the presence or absence of the signal to be detected is deduced in accordance with a predetermined correlation criterion.

In this embodiment, to deduce the presence or absence of the signal to be detected, the degrees of instantaneous correlation ($Corr_j$) calculated from the $n$ samples (here $n = 805$) are added together, the total is compared with at least one predetermined threshold value and the presence or absence of the signal is deduced from the result of this comparison.

In the example shown in Figures 3a - 3c, the CNG signal not being mixed with other signals, the calculation of the correlation is performed only once at the instant $t_j$ where $j = 701$. In this case, therefore, strictly speaking it is not necessary to calculate a total.

This characteristic will, instead, be explained with reference to the example shown in Figure 4 where the CNG signal is mixed with numerous parasitic signals. Likewise, the decision threshold will be explained with reference to this example which will now be described.

Figure 4 shows, after sampling and reconstitution, a set of incoming signals. The said set of incoming signals comprises a CNG signal mixed with a high concentration of parasitic signals having frequency components between 1062 and 1138 Hz.

The signal shown in Figure 4 is particularly representative of a CNG signal mixed with a human voice. It will be noted that the signal ranges having components between 1062 and 1138 Hz are relatively broad, which may be the case in particular if the signal with which the CNG is mixed originates from a tape recorder having a defective recording medium or a defective magnetic reading pickup.

In the example shown in Figure 4, the sampled signal comprises eleven series of consecutive samples of level "1". Their length *"l"* is shown in the Figure. So are the values of the *i* or *j* indices corresponding to the instants $t_i$ or $t_j$ at which the series in question are located on the abscissa axis.

The said series are located on the time scale by applying the rule described above, that is to say by locating the transitions to the level "0" at the end of the series of samples of level "1".

The process of detection of the CNG signal in the set of signals shown in Figure 4 will now be explained with reference to Table 1 and Figures 5a to 5k.

In this case, sampling having commenced during a period where the samples have a level "0", the time origin is fixed at the start of sampling. This sampling has taken place over two $T_{max}$ periods, so that, as previously, there are 805 samples.

On the abscissa of the diagram in Figure 4 the variation in the *i* or *j* indices, representing the orders of the samples, is shown. This scale is equivalent to the time scale. The occurrence of series of samples $S_i$ of level "1" is marked. In this embodiment the location is made at the instant following the transition from the level "1" to the level "0". Thus, for example, the first series $S_{51}$ is located at the sample *i* = 51, the transition having occurred between the instants $t_{50}$ and $t_{51}$.

In Table 1, the order of the current *i* or *j* index is shown in the left hand column.

The current instant is marked by an *i* index during all the first $T_{max}$ period of sampling. The *j* index is used to identify the instants of the "future" interval $t_i + T_{min}$ to $t_i + T_{max}$. The *j* index is therefore able to start at the end of a $T_{min}$ period. It will be seen that there is an overlap between the current instant indices and the future interval indices because of the tolerance *dT*. The $S_j$ series occurring after $T_{max}$ (*i* = 403) are marked with a *j* index appropriate for "future" intervals.

In Table 1, the $S_i$ and $S_j$ series are shown as well as their length *l* and their respective weights $P_i$ or $P_j$. These weights are calculated, as before, by use of the formula:

$$P = l \cdot (l + 1)/2 \qquad (1)$$

It will be seen that the weights $P_i$ or $P_j$ are calculated immediately after the occurrence of the series of consecutive samples of level "1" in question. It will also be seen that the above formula is such that the value $P_i$ or $P_j$ represents the number *l* of consecutive samples of level "1".

Figures 5a to 5k show the development of the history during sampling.

In accordance with the invention, when the weight $P_i$ has been calculated, a value *Histo(j)* equal to the weight $P_i$ is projected into the aforementioned "future" interval, allocating the value *Histo(j)* to each instant $t_j$ of this future interval.

In Figure 5a it will be seen that the weight of the series $S_{51}$ has a $P_{51}$ value equal to 3. This value is projected into the interval formed between the instants $t_{51} + T_{min}$ and $t_{51} + T_{max}$ (that is to say in terms of order of samples between *j* = 51 + 297 = 348 and *j* = 51 + 403 = 454). The value *Histo(j)* = 3 is shown on the diagram in Figure 5a.

The same applies for the series $S_{101}$. It will be seen, however, in accordance with the invention, when there is a choice between two *Histo(j)* values the larger one is chosen. In this way, between the instants $t_j$ where *j* = 398 and $t_j$ where *j* = 454, the conflict between the two history values (that is to say the values $P_{51}$ = 3 and $P_{101}$ = 325) is decided in favour of the larger history value. This value is allocated until the instant corresponding to the index *j* = 504.

The diagram in Figure 5c is constructed applying the above rules, the weight value of the $S_{201}$ ($P_{201}$= 1275) being allocated between the instants corresponding to the index *j* = 498 (that is to say 201 + 297) and 604 (that is to say 201 + 403).

The same rules are applied to construct the development of the history shown in Figures 5d to 5k. In particular, in the case of each conflict between two possible history values the largest one is chosen. Thus, for example, in Figure 5d, for the series $S_{252}$ having a length 2 and a weight $P_{251}$ = 3, the value previously allocated between the instants corresponding to the indices *j* = 548 and *j* = 604, which was 1275, is maintained, the value $P_{251}$ = 3 being allocated to the instants corresponding to the indices 605 to 654.

Figures 5g to 5k show that the history continues to be constructed beyond the instant $t_j$ where $j = 805$, that is to say beyond $2 \times T_{max}$. The history diagram beyond the sample 805 is not in this case used to calculate the degree of correlation. Nevertheless, it is created in this embodiment because if the sample 805 was not delivered its value would not be known. However, in accordance with a characteristic employed here, one wishes not to stop sampling during a $T_{ON}$ period and consequently sampling may be continued beyond the 805 sample in the case where the level of this sample is 1. The part of the history diagram not used for the calculation of the degree of correlation is shown hatched.

Table 1 shows, with regard to the series $S_i$ or $S_j$, the number of the relevant Figure (5a to 5k). It also shows, in the next to the last column on the right, the value of an instantaneous degree of correlation ($Corr_j$) between the weight $P_j$ calculated for the series $S_j$ of the instant $t_i$ and the $Histo(j)$ value read on the relevant Figure for the sample $j$.

In this embodiment, the degree of instantaneous correlation is calculated according to the formula:

$$Corr_j = P_j.Histo(j) \tag{5}$$

Similarly, calculation of the degree of instantaneous correlation does not in fact occur until after the period $T_{max}$ (that is to say beyond the sample $i = 403$).

The value of the degree of instantaneous correlation ($Corr_j$) is shown in Table 1. In the same Table the value of the cumulative degree of correlation is also shown in the right hand column ($\Sigma Corr_j$).

To decide if the CNG signal is or is not present in the signal shown in Figure 4 (which it is in this case: series $S_{201}$ and $S_{551}$ of length $l = 50$), the cumulative figure $\Sigma Corr_j$ is compared with a predetermined threshold value and the presence or absence of the signal is deduced depending on the result of the said comparison.

In this case, according to another aspect of this embodiment, prior to the comparison, the proportion $\rho$ of samples over the entire duration of sampling representing the presence of a signal of level "1" is measured, and a threshold value is selected from a plurality of threshold values as a function of the said proportion measured. This calculation is performed in parallel with the calculation of weights by applying the formula:

$$\rho = \Sigma l / n. \tag{7}$$

In this embodiment, $\Sigma l = 210$, whilst $n = 805$. Under these conditions $\rho = 0.26$.

Preferably, to avoid making a conclusion about the presence of a CNG signal when the latter is mixed with a large number of parasitic signals, a threshold value is selected as a function of the proportion $\rho$ measured.

In fact, the inventors have determined four threshold value corresponding to different proportions of "presence". These values are shown in Table 2.

In this case the proportion $\rho$ measured for the signal shown in Figure 4 being 0.26, the threshold value selected is 1,000,000.

It will be seen, Figure 5k and Table 1, that the total of the values of the instantaneous correlations at the end of sampling is 1.737.025 - a value much greater than that of the threshold chosen as a function of the proportion $\rho$.

This means that the CNG signal is present in the signal shown in Figure 4.

2. Description of the method in accordance with a second preferred embodiment of the invention

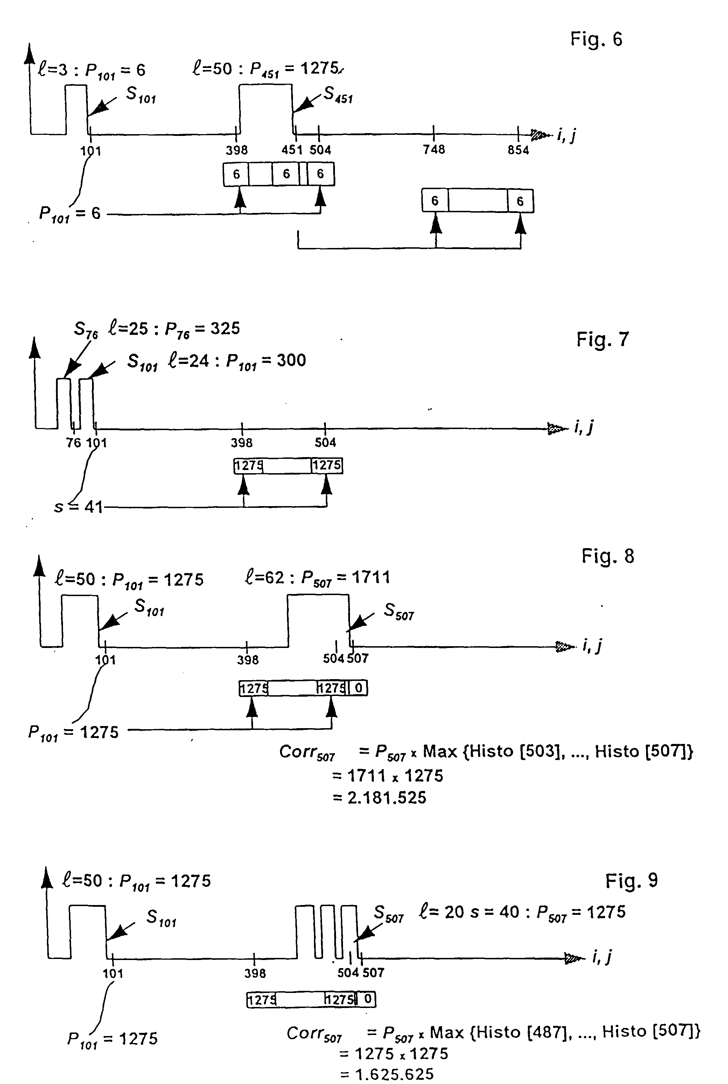

Other aspects of the present invention used in a preferred method of employing the present invention will now be described with reference to Figures 6 to 9.

The aims of these aspects are:

- to avoid projecting large weights when the latter correspond to parasitic signals and not to the part $T_{ON}$ of the signal to be detected. Figure 6 shows such a case, and
- to take into account certain cases where the parasitic signals combine with the period $T_{ON}$ of the signal and either partially cancel out the latter or prolong it. These cases and the features of the invention making it possible to take them into account are described with reference to Figures 7 to 9.

Apart from the particular characteristics described with reference to Figures 6 to 9, the other characteristics of the method in accordance with the second preferred embodiment are identical to those described above with reference to Figures 3a to 3c, 4 and 5a to 5k.

In Figures 6 to 9, portions of the set of signals to be processed are shown, after sampling and reconstitution. It can be seen that the said portions of the signals comprise various series of consecutive samples of level "1". These series are located here in accordance with the convention described above, that is to say they are located at the instant following the instant where the transition from the level "1" to the level "0" has occurred.

In Figure 6 the portion of the signal reconstituted comprises two series $S_{101}$ and $S_{451}$ with respective lengths $l = 3$ and $l = 50$.

The creation of the history for the series $S_{101}$ assigns, amongst others, the value $Histo(451) = 6$ ($P_{101} = 6$) to the instant $t_j$ where $j = 451$ in accordance with the invention as explained above. Now, the series $S_{451}$ of length $l$ is located at $t_i$ where $i = 451$. Calculation of the weight $P_i$ in accordance with the formula set out above gives $P_{451} = 1275$. If, to construct the history for the current instant $t_i$ where $i = 451$, the rule set out above is employed, at the instants $t_j$ where $j$ varies from 748 to 854 the value of the weight $P_i$ is 1275. Now, given that the value $Histo(451)$ is 6 (that is to say the projection of the weight of the series $S_{101}$) it can be seen that the series $S_{101}$ and $S_{451}$ are not recurrent because of the large difference in the weights (values 6 and 1275 respectively).

Consequently, in accordance with this aspect of the present invention, the sampling is divided into two periods. During the course of the first period of duration $T_{max}$ one proceeds as described previously. On the other hand, for all series $S_j$ located at the instant $t_j$ arriving after the elapse of the first $T_{max}$ period (that is to say after 403 samplings) from the time origin, a $Histo(k)$ value equal to the minimum between $Histo(j)$ and $P_j$ is projected in a second future time interval, comprised between $t_j + T_{min}$ and $t_j + T_{max}$, allocating the $Histo(k)$ value to each instant $t_k$ in this second future time interval which has not previously been allocated a larger value.

Application of this rule leads in the example shown in Figure 6 to the projection to the instants $t_k$ where $k$ varies from 748 to 854 of the weight value of the first series $S_{101}$, in other words a value of 6.

In this manner, account is taken of the fact that the series located at the instant 451 does not correspond to a period $T_{ON}$ of the signal to be detected but to noise, and consequently the history of this series is reduced in magnitude by taking into account the history of the preceding series.

In the case where the series located at the instant 101 has a substantially greater length ($l = 47$ for example) and because of this would be close to the length of the series located at the instant 451, the same rule would be applied, but the range of weights being different (1128 and 1275) a large history value would be projected in the second future interval of the instants ($t_k$ where $k$ varies from 748 to 854). In such a case it would be highly probable that there were two recurrent periods, the first of which had been affected by parasitic signals which had cancelled the values of some samples.

Referring to Figure 7, the case in which a rare physical phenomenon occurs where noise cancels out at a given instant the presence of the frequency of the signal to be detected will be examined.

At $t_i$ where $i = 76$ a sequence of length $l = 25$ is located and at $t_i$ where $i = 101$ a sequence of length $l = 24$ is located.

In fact a sequence of length 50 would have had to be located at $t_i$ where $i = 101$ but the sample $i = 76$ has been cancelled by the noise. The two series $S_{76}$ and $S_{101}$ have the weights $P_{76} = 325$ and $P_{101} = 300$ respectively on applying the formula set out above. However, one series of fifty samples of level "1" has a weight of 1275 which is a value very different to 300 or 325.

The aspect of the invention described here aims to prevent any samples of level "0" (in the middle of a series of level "1") corresponding to noise falsifying the calculation of the correlation and because of this preventing a $T_{ON}$ period being recognised.

According to this aspect of the invention the weight of a nominal series of $ON$ samples (in this case 50) is given to the last series of samples of level "1". In order to do that, at the moment of locating a series, after a transition from "1" to "0", the number $s$ of samples of level "1" since the last $ON_{min}$ samples is examined. If the said number is very close to $ON_{min}$ (for example $s >= ON_{min} - 2$) it will be considered that there is a series of level "1" due to a $T_{ON}$ period of the signal to be detected which has been interrupted by noise. A constant value is allocated to the weight equal to

$$P = ON. \ (ON + 1)/2 = 1275 \qquad (8)$$

In the case shown in Figure 7, the series $S_{101}$ comprises 24 samples, but over a duration $ON_{min}$ preceding the sample of rank $i$ where $i = 101$ (which is 42 samples) there are 41 samples with the value "1". The weight of the series $S_{101}$ is thus equal to the constant value mentioned above, in other words it is 1275.

It will be seen that in the creation of the history, the projection of the weight determined at the instant $t_{76}$, that is 325, is "squeezed out" by the weight determined at the instant $t_{101}$ because of the rule according to which the largest value is chosen for the creation of the history.

A description will now be given, with reference to Figure 8, of the case where a series of signals of level "1" greater than $ON_{max}$ is detected. This is the case with the series $S_{507}$ in Figure 8 which is located at the instant $t_{507}$ arriving after the elapse of the first maximum period $T_{max}$ after the time origin.

In this case, where the number $I$ of samples in the series in question is greater than the number of samples $ON_{max}$ which could be generated in the period $T_{ON}$ increased by its tolerance $(dT_{ON})$, the degree of instantaneous correlation is calculated by means of the formula:

$$Corr_j = P_j . Max \{Histo [j - I + ON_{max}], ..., Histo[j]\} \qquad (2)$$

Thus, at the instant $t_i$ where $i = 101$, a series $S_{101}$ of length 50 is located. Calculation of the history results in the allocation to the instants $t_j$ where $j$ varies from 398 to 504 of the weight value $P_{101} = 1275$.

At $t_j$ where $j = 507$ the series $S_{507}$ of length 62 is located. This series corresponds in fact to a signal period recurrent with the series $S_{101}$ prolonged by parasitic signals.

Nevertheless, the value $Histo(507)$ is liable to be zero on applying the rules described above with reference to Figures 4 and 5, because only the instants $t_j$ where $j$ varies from 398 to 504 have been allocated the value 1275.

However, calculation of the correlation on applying the formula:

$$Corr_j = P_j.Histo(j) \qquad (5)$$

in fact gives a value zero because the calculation is made at the instant $t_j$ where $j = 507$, and at that instant $Histo(507) = 0$.

To overcome this disadvantage, and on applying this aspect of the present invention, the value of the weight of the series $S_{507}$ is a predetermined constant (here $P = ON_{max}.(ON_{max} +1)/2 = 1711$). In fact it is possible that the series $S_{507}$ is a series corresponding to a $T_{ON}$ period modified by its tolerance $dT_{ON}$.

Furthermore, as the correlation calculation is performed at the instant $t_j$ where $j = 507$, according to this aspect of the invention the formula used is:

$$Corr_j = P_j . Max \{Histo [j - I + ON_{max}], ..., Histo[j]\} \qquad (2)$$

In this case:

$$Corr_{507} = P_{507}.Max \{Histo [507 -62 + 58], ..., Histo[507]\}$$

$$Corr_{507} = 1711.Max \{1275, 1275, 0, 0, 0\} = 1711 \times 1275 =$$

$$2,181,525$$

Thanks to these arrangements, a history value equal to zero due to parasitic signals is not taken into account and, if applicable, a $T_{ON}$ period of the CNG is detected.

Referring to Figure 9, the (rare) case of a series of samples of level "1" interrupted by parasitic signals and then prolonged by other parasitic signals will now be described.

This is the case of the three series preceding the sample 507 in this Figure.

In fact, prior to the instant $t_{507}$ a series of samples of level "1" of length 62 finishes, however this series is interrupted by two parasitic signals each cancelling a sample.

This aspect of the present invention takes account of this case because;

- first of all, for the calculation of the weight, the latter is considered to be a predetermined constant number (from the formula $P = ON.(ON + 1)/2 = 1275)$ if the number $I$ is less than the number $ON_{min}$ of samples which could be delivered during $T_{min}$ (which is the case here because the number is 20 preceding the instant $t_{507}$) and if the number $I$ of samples representative of the presence of the signal during the period $T_{ON} - dT_{ON}$ preceding the current instant (in this case $t_{507}$) is greater than a predetermined limit number (here $ON_{min}$ - 2 = 40). In this case, among the $ON_{min}$ samples ($ON_{min} = 42$ in this example) preceding the instant $t_{507}$, there are 40 samples of level "1" and under these conditions, on applying the rule stated above, the weight $P$ of the series located at the instant $t_{507}$ is 1275, and
- with regard to the correlation calculation, because the series $S_{507}$ arrives after the elapse of the first maximum period $T_{max}$ after the time origin, and since, on the one hand, the number $I$ of samples in the series $S_{507}$ is less than the number of samples $ON_{max}$ (which is the case because there are only 20 in this case) and because, on the other hand, the number s of samples of level "1" during the 42 instants of sampling preceding the instant 507 is greater than 40, the said degree of instantaneous correlation is calculated by the formula:

$$Corr_j = P_j \cdot Max \{Histo [j - \Delta], ..., Histo[jj]\} \tag{3}$$

where $\Delta$ is a predetermined shift.

In this preferred method of employment, $\Delta$ is equal to 20. It is in practice reasonable to fix this parameter at 20 because even in the very unfavourable case of a CNG mixed with a voice recorded on a defective magnetic support medium, generating 80% of samples of frequency $1100 \pm 38$ Hz, the probability of detecting 20 consecutive samples of level "1" is $0.8^{20} = 1\%$

In the case of $t_i$ where $i = 507$, $s = 40$ in the case shown in Figure 9 and consequently the weight is fixed at 1275 on applying the above rule. The said weight is correlated with the maximum value of the set constituted by the values of $Histo(487)$ to $Histo(507)$ which is 1275. On applying the usual formula for calculating the correlation:

$$Corr_{507} = 1275 \times 1275 = 1,625,625 \tag{9}$$

These arrangements make it possible to avoid the parasitic signals decreasing the $Corr_j$ value and as a result of this preventing the detection of a $T_{ON}$ period of the CNG.

The cases which have been discussed with reference to Figures 6 to 9 are quite rare cases. Nevertheless, in the preferred embodiment of the present invention they are taken into account.

3. Description of a preferred method of embodiment of a device in accordance with the invention and two facsimile machines incorporating such a device

A preferred method of embodiment of a device using the method in accordance with the invention will now be described with reference to Figures 10a and 10b.

Figure 10a is a block diagram of a first preferred embodiment of a facsimile machine 10 in accordance with the invention, including a device for detecting the CNG. In this embodiment, the facsimile machine comprises an input-output connection 21 to which may be connected, on the one hand, a telephone handset 35 and, on the other hand, a telephone answering machine 2. Figure 10b shows a second preferred embodiment of a facsimile machine 10' in accordance with the invention including a device for detection of the CNG. The facsimile machine is similar in structure to that in Figure 10a but also incorporates an integral answering device 90 so that the user has the choice between using the said integral answering device or an external answering machine.

The external telephone answering machine 2 shown in Figures 10a and 10b connected to the input 21 is of completely conventional design and will not be described here. It will be noted that, in accordance with the normal method of operation of telephone answering machines, when it detects an incoming signal call CI, it takes over the line and emits a message, usually called an answering machine message (in English Out Going Message; OGM).

In the embodiment selected and shown in Figure 10a, the facsimile machine 10 integrates, on the one hand, conventional means employed for operating a facsimile machine and, on the other hand, means suitable for employing the method according to the invention.

In a conventional manner the facsimile machine 10 comprises:

- a microprocessor 16 connected by a bus (not shown) to, on the one hand, a read only memory ROM 22, in which are recorded, in particular, the programs executed by the microprocessor 16 and, on the other hand, a rewritable memory RAM 23 comprising in particular a working zone and various data registers. Other conventional elements necessary for the functioning of the microprocessor 16 have not been shown, for the sake of simplification, and will not be described here,
- a reading unit 13 for documents to be transmitted connected to the microprocessor 16,
- a printing unit 12 likewise connected to the microprocessor 16 designed in a conventional manner to print documents received, amongst other things,
- a control keyboard 14 and a screen 15, adapted to display various conventional items of information which are useful for the user, also connected to the microprocessor 16,
- a modem 11 controlled by the microprocessor 16 designed to modulate and demodulate the signals transmitted or received on the interface line 20,

- a network monitoring unit 6 designed to make, in a conventional manner, the electrical interface between the facsimile machine 10 and the telephone network. The network monitoring unit 6 is connected to the microprocessor 16, amongst other things, and is controlled by the latter, in particular to control the numbering by pulses, when the latter is used, and
- an incoming call signal CI detector 5 connected to, on the one hand, the microprocessor 16 and, on the other hand, to the interface line 20. The said incoming call signal detector 5 is adapted to detect a call signal CI coming from the telephone network on the interface line 20.

The above assembly of means has a completely conventional structure and its functioning to ensure its operation as a facsimile machine is well known to a person skilled in the art. Consequently, these means and their organisation will not be described in detail here.

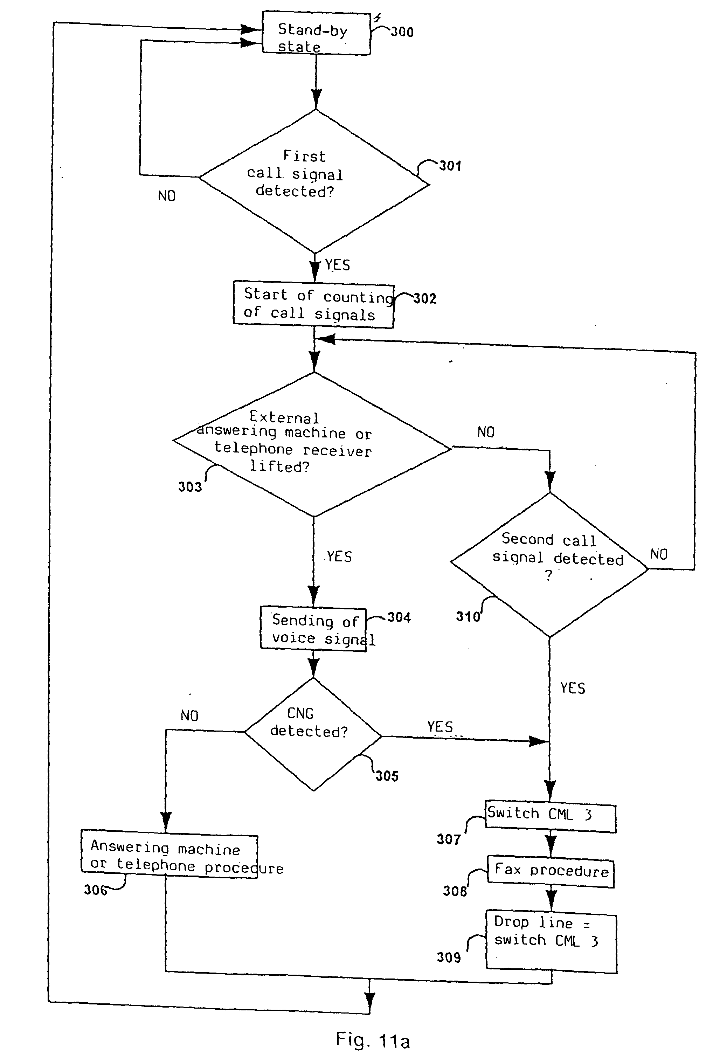

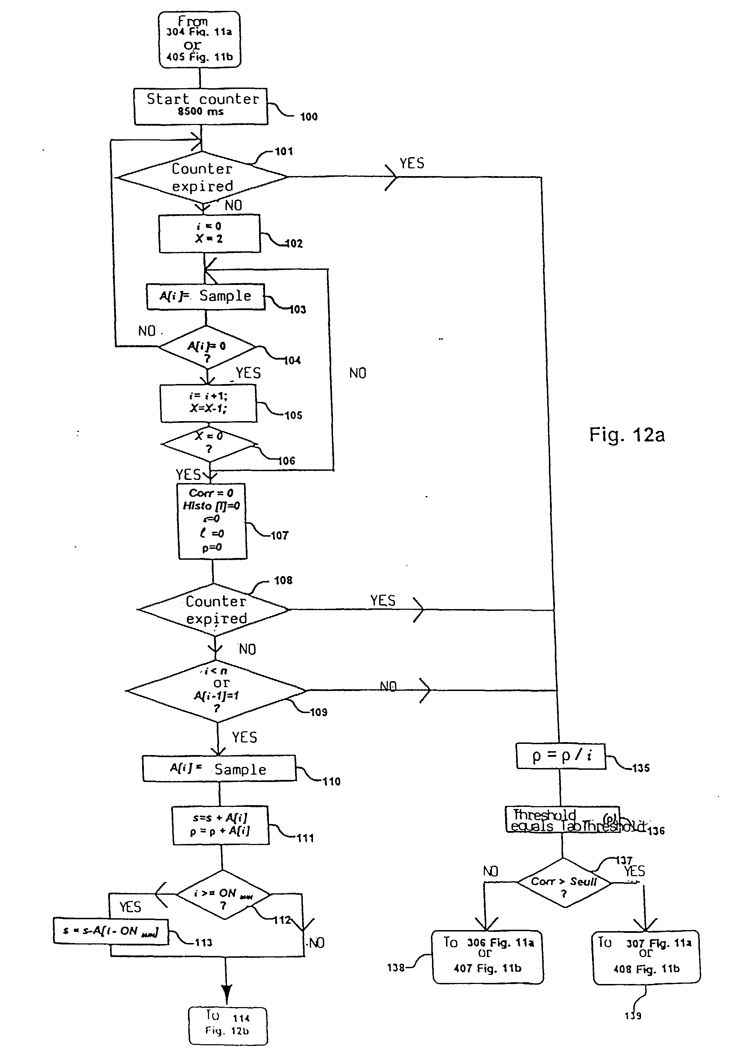

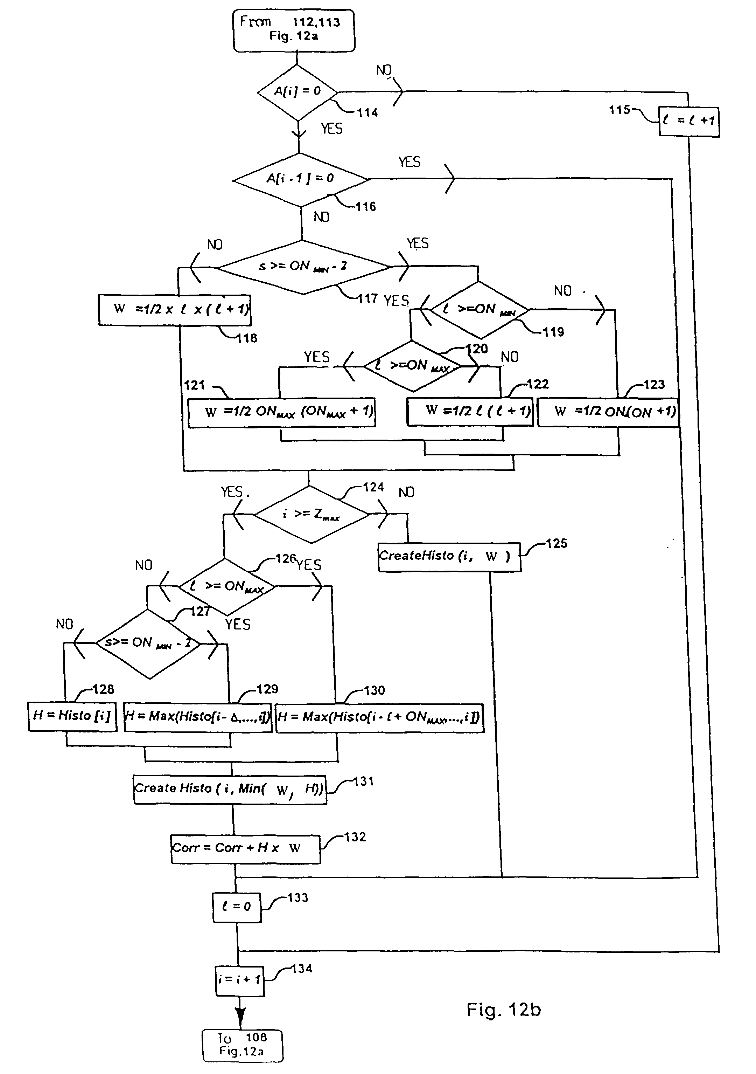

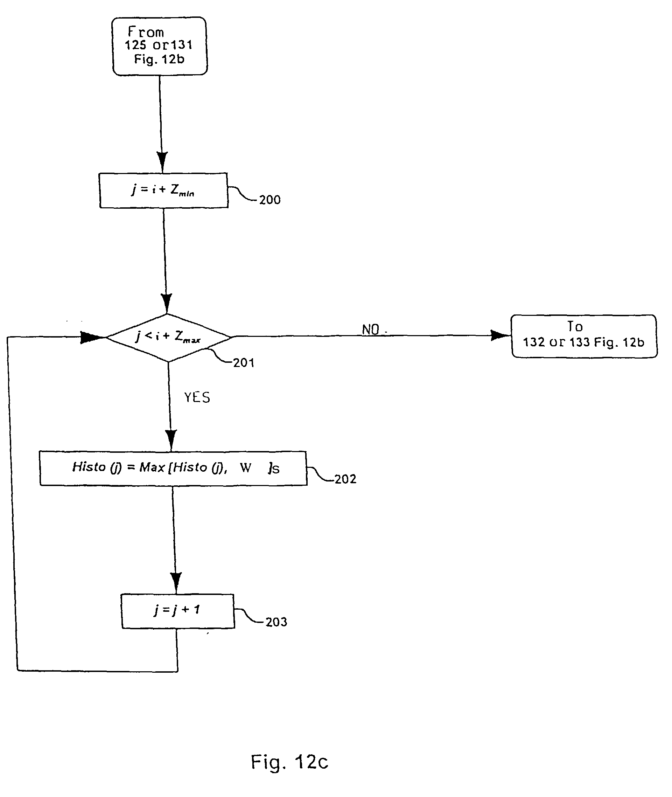

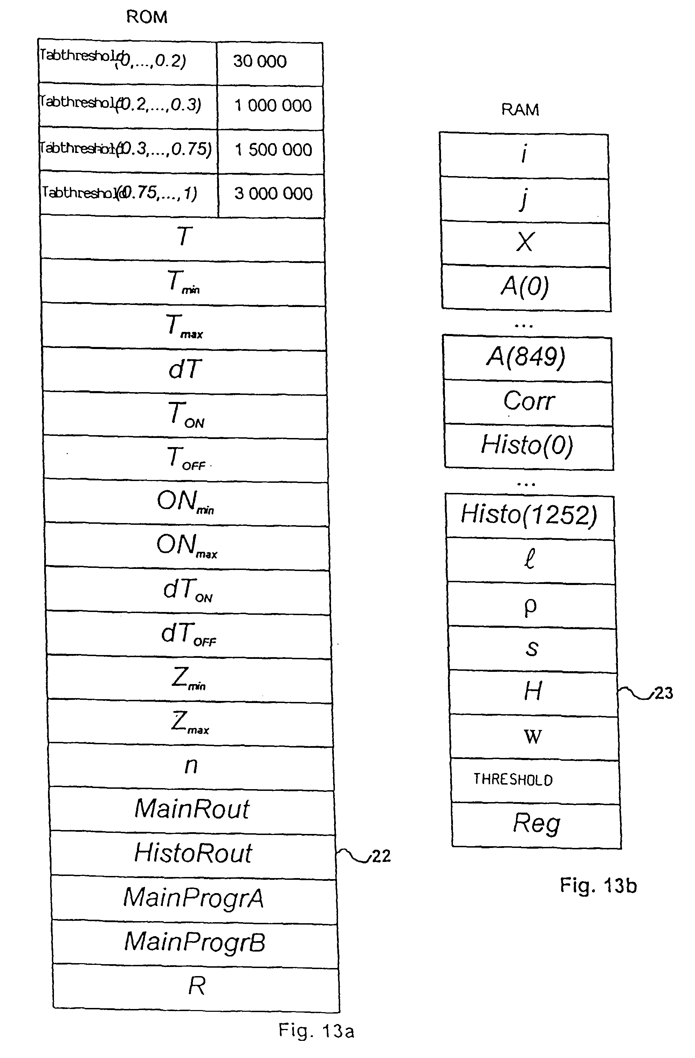

Nevertheless it will be noted that the read only memory ROM 22 (described below with reference to Figure 13a) also comprises conventional facsimile machine operation programs and programs in accordance with the flow diagrams of Figures 11a, 12a, 12b and 12c, which will be described below. Similarly, the rewritable memory RAM 23 (described below with reference to Figure 13b) comprises, in addition to its conventional registers designed to allow performance of the facsimile machine functions, a certain number of registers specifically for the employment of the method in accordance with the present invention.

In accordance with one characteristic of the invention, the detection device comprises means of discrimination of the carrier frequency of the CNG (1100 ± 38 Hz) from other frequencies in the set of incoming signals, the said means of discrimination being adapted to deliver an output signal at two levels representative respectively of the presence or absence of the said frequency in the said set of signals.

In the embodiment selected and shown in Figure 10a, the facsimile machine which incorporates the detection device, comprises a band pass filter centred on the frequency 1100 Hz. In this embodiment it is a filter sold under the reference AFM94FI100E1 by the company MURATA MFG CO, LTD located in Japan. The detection frequency is 1100 Hz. The levels of detection and non-detection are respectively -46 dBm and -49 dBm. The band of detection frequency is [1050 Hz, 1150 Hz], which means that the frequency band comprised between 1062 and 1138 Hz is detected in accordance with the above-mentioned ITU -T standard. Moreover, the filter does not discriminate any frequency below 1000 Hz or above 1200 Hz.

According to the invention, the discrimination means, constituted in this case by the band pass filter 8, are connected to sampling means, constituted in this case by the microprocessor 16 and a timer 24. The latter makes it possible to set the cadence of the microprocessor 16 so that the latter samples at regular intervals (here every 10 ms) the level of the output signal of the filter 80.

The facsimile machine 10 also comprises an electronic switch constituted in this case by a CML relay 3 of which

- an input 30 is directly connected to the line interface 20,
- an output 31 is connected, on the one hand, to the input 50 of the incoming call signal detector 5 and, on the other hand, to the input-output connector 21, and
- an output 32 is connected by the interface 61 to the network monitoring unit 6.

In accordance with a characteristic of the embodiment selected and shown here, the control input 33 of the CML electronic switch 3 is connected to the microprocessor 16.

Lastly, the facsimile machine 10 comprises a "receiver lifted" detector 4 of which:

- an input 41 is connected to the input 21 of the facsimile machine connected to the external answering machine 2, and
- an output 42 is connected to an input of the microprocessor 16.

The embodiment selected and shown in Figure 10a is a current detector sold under the reference HFS113F017A1 by the company MURATA MFG CO, LTD located in Japan.

A description will now be given of the functioning of the facsimile machine 10 shown in Figure 10a when the latter is connected to, on the one hand, an answering machine 2 and, on the other hand, a telephone 35. This description will be made with reference to the flow diagram shown in Figure 11a.

The state 300 corresponds to the waiting state of the facsimile machine when the latter is automatic mode, that is to say in a mode in which, if, following a call, the line is not occupied because the answering machine is not in use and the user does not pick up the telephone receiver, the facsimile machine switches automatically into telephone mode as recommended by the French standard.

In the waiting state 300 the program recorded in the read only memory ROM 22 indicates to the microprocessor 16 that it should control the CML electronic switch 3 so that it is in the position shown in Figure 10a, the input 30 of the CML electronic switch 3 being connected to the output 31. Because of this, in the waiting stage a call coming from the telephone network on the interface line 20 is automatically directed to the external answering machine 2 and the telephone 35, if the latter is connected to the input 21 as shown.

In addition, in the waiting state the microprocessor 16 regularly reads, on the one hand, the output 42 of the receiver lifted detector 4 in order to determine if the external answering machine 2 or the telephone 35 is connected to the line and, on the other hand, the output 51 of call signal detector 5. These readings are made every 10 ms.

When a call signal is received on the interface line 20 it is, on the one hand, directed to the external answering machine 2 and the telephone 35, and, on the other hand, to the call signal detector 5. The test of step 301 is then positive and the program then commands the counting of call signals (step 302). In fact, in accordance with French standards regarding the subject, the facsimile machine should pick up the line within 15 s and, in a conventional manner, the logic means of the facsimile machine count the ringings and pick up the line after the second set of rings.

In reality the line may be picked up here in three ways:

- by the answering machine 2 if the latter is in use,
- by the user who picks up the telephone 35, and
- by the facsimile machine.

At step 303, a test is made in order to discover if the line has been picked up by the answering machine or by the user.

The receiver lifted detector 4 then detects the uptake of the line made by the external answering machine 2 or the user by means of the telephone 35. Because the output 42 of the receiver lifted detector 4 is controlled by the microprocessor 16, the latter is notified of this uptake 10 ms afterwards at the latest and the test 303 is positive.

In parallel, if it has picked up the line, the external answering machine sends through the line input-output 21 an OGM vocal message from the answering machine which is then transmitted on the telephone network through the interface line 20 because of the position of the switch 3 which connects the terminals 30-31. The OGM voice signal of the answering machine may thus be mixed with a facsimile machine CNG call signal coming from a facsimile machine and received on the interface line 20.

If the line is picked up by the user, the latter may, before hearing the CNG signal, himself say several words into the telephone handset and, because of this, the signal emerging from the telephone handset, which finds its way onto the interface line 20, may be mixed with the CNG signal coming from a calling facsimile machine.

The stage 304 symbolically shows in the flow diagram of Figure 11a the sending of a voice signal by the answering machine or by the user.

The CNG signal detection program is then put into operation (test 305) as described hereafter with reference to the Figures 12.

In a general manner, the said detection program uses the detection procedure which has been described above with reference to Figures 5 to 9. The microprocessor 16 in combination with the program of Figures 11a and 12 recorded in the read only memory ROM 22 and various registers of the rewritable memory RAM 23 (memories described below with reference to Figures 13a and 13b) acts as a processing means in the sense of the present invention adapted to:

- fix the time origin and take the *n* samples,
- locate on the time scale the occurrence of series of samples having a level corresponding to the presence of the frequency 1100 ± 38 Hz and calculate the corresponding weight values,
- project in a future time interval the corresponding *Histo(j)*,
- calculate the instantaneous degree of correlation between the weight calculated, if applicable, for a series of an instant occurring at the future time interval and the history value corresponding to the weight projected in the said future time interval, and
- deduce the presence or absence of a signal in accordance with a decision criterion.

In addition, the microprocessor 16 and the program recorded in the read only memory ROM 22 are adapted, in combination with the registers of the rewritable memory 23, to employ the particular characteristics of the preferred embodiment of the method described with reference to Figures 6 to 9.

In the case where the CNG is not detected during the test 305, the CML electronic switch 3 remains in the preceding position so that the telephone answering machine 2 or the telephone remain directly connected to the interface line 20. The normal answering machine or telephone procedure, which will not be described here, is symbolized by the step 306 in Figure 11a. At the end of the procedure of step 306, the facsimile machine 10 is again in the state of waiting for a telephone call.

In the case where the CNG is detected at stage 307, the microprocessor 16 commands switching of the electronic switch 3 so that the output 30 of the switch is connected to the input 32, that is to say to the network monitoring unit 6.

The facsimile machine 10 then moves into fax mode (stage 308) during which it can receive a fax message or emit one at the request of the calling facsimile machine. The fax mode is conventional and well known in itself to a person skilled in the art. Therefore it will not be described in detail here.

At the end of the fax procedure, stage 309, the line is released in the conventional manner and, in accordance with the aspect of the invention described here, the CML electronic switch 3 is again switched into the waiting position, that is to say that in which the terminals 30 and 31 are connected (stage 309).

In the case where the test 303 is negative, that is to say if after the first call signal the pick up of the line has not been detected by the detector 4, then, as described above the call signals are counted, each call signal being detected by the detector 5. The test 310 makes it possible to verify if the third call signal has been detected. If not, the counting continues.

When the third call signal is detected, the program connects to the step 307 described above, so that the facsimile machine 10 consequently changes into fax mode.

An alternative embodiment of the facsimile machine described with reference to Figure 10a will now be described with reference to Figure 10b. In the case of this alternative, the facsimile machine 10' incorporates an answering machine.

The elements common to Figures 10a and 10b retain the same reference numbers and will not be described again here.

According to the embodiment selected and shown in Figure 10b, the facsimile machine 10' comprises in addition to the means described with reference to Figure 10a:

- a built-in answering machine 90. In the said embodiment this is an integrated circuit able, under the control of a microprocessor, such as the microprocessor 16, to provide the conventional functions of a telephone answering machine (in particular the sending and reception of telephone messages). The analogue output 91 of the answering machine component 90 is connected to the input 62 of the network monitoring unit 6. The digital control input output 92 of the answering machine component is connected to the microprocessor 16 in such a manner that the latter controls, in a conventional manner, the answering machine component 90. The structure of the said component is well known in itself to a person skilled in the art and does not need to be described in detail here. It will be noted that in this embodiment it is a circuit sold under the reference TC88401F06 by the TOSHIBA company, located in Japan, associated with a digital/analogue converter of conventional type,
- a microphone 93 designed to allow recording of the OGM and connected to the component 90, and
- a loudspeaker 94 equipped with an analogue digital interface and connected to the microprocessor 16.

In addition, in this embodiment the input 80 of the band pass filter 8 is connected to an analogue output 70 of a second electronic analogue switch 7 controlled by the microprocessor 16.

The electronic analogue switch 7 is designed to switch the output 70:

- on the one hand to an input 72 connected to the output 62 of the network monitoring unit 60 and to the analogue input output 91 of the integrated answering machine 90, and
- on the other hand, through an input 71 to the input 21 of the facsimile machine 10' and able to be connected to an external answering machine 2 as shown in Figure 10a.

Furthermore, the CML electronic switch 3 and the electronic analogue switch 7 are synchronized and, in this embodiment, this synchronization is performed by the microprocessor 16 connected to the command ports 73 and 33 of the electronic analogue switches 7 and CML 3.

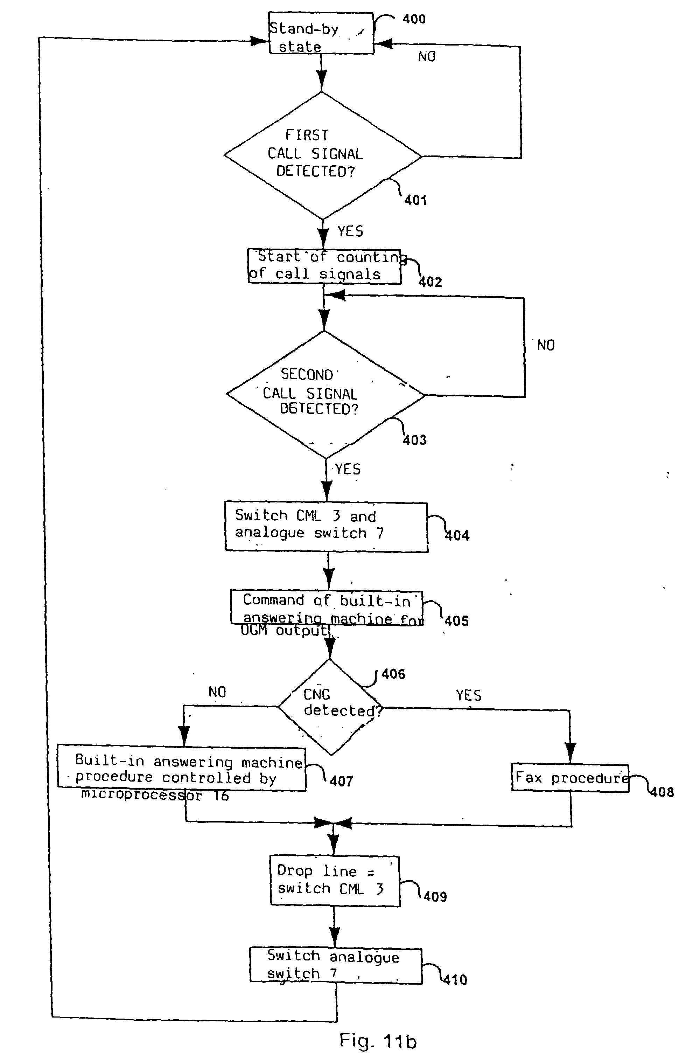

The operation of the facsimile machine 10' comprising an integrated answering machine will now be described with reference to Figure 11b.

It will be observed first of all that the functioning of the facsimile machine with an integrated answering machine 10', when it is in fax mode, is completely conventional, and as such does not need to be described here. The same applies to the functioning of the facsimile machine with an integrated answering machine 10' when the latter is in answering machine mode, the built-in answering machine 90 then operates in a quite conventional manner to provide the usual functions of an answering machine, under the control of the microprocessor 16, in combination with the programs recorded for this purpose in the read only memory ROM 22.

Some of the stages in the flow diagrams in Figures 11a and 11b are identical. They will not be described again here.

It will also be observed that the facsimile machine 10' has two general modes of operation, namely:

EP 0 749 230 B1

- an operating mode employing the integrated answering device 90 (integrated answering device mode), which will be described later with reference to Figure 11b, and

- an operating mode in which the integrated answering device 90 is put out of action, the user having the ability either to use an external answering machine such as the answering machine 2, or to not use an answering machine. This mode of operation, which is called "external answering machine/telephone mode" is similar to that described with reference to Figure 11a, the second electronic analogue switch 7 then being in the position shown in Figure 10b, that is to say with its terminals 70 and 71 connected. It will be seen that then, because of the putting the integrated answering device 90 out of action, the diagram of Figure 10b is identical to the diagram of Figure 10a.

A switch installed in the keyboard 14 allows the user to choose between the two modes of operation. It will be noted that when the user wishes to use the integrated answering device, he must change into integrated answering device mode and when he wishes to use his telephone and reply to incoming calls, he must change into external answering machine/telephone mode.

In the integrated answering device mode, the operation of the facsimile machine 10' is as follows.

The stage 400 corresponds to the waiting stage of the facsimile machine 10'. In this state the program recorded in the read only memory ROM 22 indicates to the microprocessor 16 that it is necessary to command the CML electronic switch 3 and the second electronic analogue switch 7 so that they are in the position shown in Figure 10b, namely:

- the input 30 of the CML electronic switch 3 is connected to the output 31 and, because of this, in the waiting state a call coming from the telephone network connected to the interface line 20 is automatically directed to the call signal detector 5, and

- the input 71 of the second electronic analogue switch 7 is connected to the output 70, that is to say to the band pass filter 8. Because of this the band pass filter 8 is not connected to the output 62 of the network monitoring unit 6.

In addition, in the waiting state, the microprocessor 16 regularly monitors the output 51 of the call signal detector 5. This reading is performed every 10 ms.

When a call signal is received on the interface line 20 it is thus directed to the call signal detector 5. The test of step 401 is then positive and the program commands the counting of call signals (step 402). The test 403 is designed to monitor if the second consecutive call signal has been detected. If not, the counting continues. If the test 403 is positive, the microprocessor commands, at step 404, switching of the electronic analogue switches 3 and 7 so that:

- the input 30 of the electronic switch 3 is connected to the output 32, the interface line being, because of this, connected to the analogue input 71 of the integrated answering device through the intermediary of the network monitoring unit 6 which is transparent, and

- the input 72 of the electronic analogue switch 7 is connected to the output 70 of the latter, the interface line 20 being because of this connected to the band pass filter 8.

Concomitant with step 405, the microprocessor commands the emission, by the integrated answering device 90, of an OGM answering machine voice signal through the analogue output 91. The OGM voice signal of the answering machine may thus be mixed with a CNG facsimile machine call signal coming from a facsimile machine and received on the interface line 20.

The program then commands the performance of the test performed in step 406. The said test, which is intended to verify if the CNG is detected or not, being identical to test 305 of the Figure 11b.

In the case where the test 406 is negative, that is to say the CNG is not detected, the electronic switches 3 and 7 remain in their previous position so that the integrated answering device 90 remains directly connected to the interface line 20. The normal answering machine procedure, which will not be described here, is symbolized by the step 407.

In the case where the CNG is detected at step 406, the microprocessor 16 maintains the electronic switch 3 in its previous position so that the output 30 of the switch is connected to the input 32, that is to say to the network monitoring unit 6.

The facsimile machine 10' then changes into fax mode (step 408) during which it may, in particular, receive a fax message or transmit one at the request of the calling facsimile machine. The fax mode is conventional and well known as such to a person skilled in the art. It will therefore not be described in detail here.

At the end of the answering machine procedures (407) or the fax procedures (408) the program commands the freeing of the line, in the conventional manner, and, in accordance with the aspect of the invention described here, the analogue switches 3 and 7 are switched into the waiting position again, that is to say that in which, on the one hand, the terminals 30 and 31 are connected and, on the other hand, the terminals 70 and 71 are connected (steps 409 and 410).

17

3. <u>Description of the CNG detection program employed by the logic means of the facsimile machines shown in Figures 10a and 10b.</u>

A description will now be given, with reference to Figures 12a - 12c, 13a and 13b, of the operation of the CNG detection program forming the object of tests 305 and 406 of the flow diagrams of Figures 11a and 11b.

Figures 13a and 13b are diagrammatic Figures showing respectively the organisation of the read only memory 22 and of the rewritable memory 23 shown schematically in Figures 10a and 10b.

Wherever possible, the memory zones of the read only memory 22 and the registers of the random access memory 23 bear the same reference numbers as the data which they store and which is described below.

In Figure 13a, it can be seen that the ROM memory comprises:

- the two dimensional Table entitled Threshold Table and reproducing the data shown in Table II,
- memory zones $T, T_{min}, T_{max}, dT, T_{ON}, T_{OFF}, ON_{min}, ON_{max}, dT_{ON}, (dT_{OFF}), Z_{min}, Z_{max}, n$
- a memory zone *MainRout* in which is recorded the principal routine of Figures 12a and 12b,
- a memory zone *HistoRout* in which is recorded the sub-routine of Figure 12c relating to the creation of the history,
- a memory zone *MainProgA* in which is recorded the main operating program described with reference to Figure 11a,
- a memory zone *MainProgB* in which is recorded the main operating program described with reference to Figure 11b, and
- a plurality of memory pockets *R* in which are recorded, amongst other things, programs enabling the functioning of the facsimile machine shown in Figures 10a and 10b in fax mode and of the device shown in Figure 10b in integrated answering device mode as well as programs for controlling peripheral elements.

Figure 13b shows diagrammatically the organisation of the registers of the rewritable memory RAM 23. These are registers which will be used for the main program shown in the Figures 12a and 12b and for the program for calculating the history shown in Figure 12c.

These registers are:

- a register *i* in which the variable *i* is recorded,
- a register *j* in which the variable *j* is recorded,
- a register *X* in which a variable *X* is recorded,
- 850 registers numbered *A(0)* to *A(849)* in which the variables *A(0)* to *A(849)* are recorded,
- a register *Corr* in which the variable *j* is recorded,
- 1253 registers in which the variables numbered *Histo (0)* to *Histo (1252)* are recorded,
- a register *l* in which the variable *l* is recorded,
- a register ρ in which the variable ρ is recorded,
- a register *s* in which the variable *s* is recorded,
- a register *H* in which the variable *H* containing the history of the series located at the current instant is recorded,
- a register *P* in which a variable *P* corresponding to the weights $P_i$ or $P_j$ is recorded, and
- a register *Threshold* in which a variable *Threshold* is recorded.

The RAM memory 23 also comprises a set of other registers *Reg* used to make possible, in a conventional manner, the operation of the programs of fax and integrated answering device modes which will not be described here.

A description will now be given with reference to Figures 12a to 12c of the flow diagrams of the principal routine, and the sub-routine for calculating the history, used during the tests 305 and 406 relating to Figures 11a and 11b.

The principal routine shown in Figures 12a and 12b comprises, on the one hand, an initialisation phase (steps 100 to 106) and, on the other hand, a phase of processing the samples (steps 107 to 139).

The initialisation phase is intended to ensure that the time origin is fixed in a $T_{OFF}$ period of the CNG. Thus, in this embodiment, in the case where at the start of sampling level "1" logic signals are produced, the occurrence of two consecutive samples of level "0" is awaited in order to store the first sample.

The first step 100 of the initialisation phase consists of triggering a counter which, in co-operation with the clock 24, counts the 8500 ms which is the longest the sampling may last.

In the case where the test is negative, the program then starts step 102 where the register in which the microprocessor 16 stores the variable *i* indicating the *i*th sample is reset at "0". In addition the microprocessor 16 also initialises the variable *X* at 2. This variable represents the number of consecutive samples of level "0" needed to deduce the absence of a signal.

At step 103, the value of the output port of the filter 8 is read and stored in the register of rank *i* of variables *A(0)* to *A(849)* of the RAM. The set of registers *A(0)* to *A(849)* forms a one-dimensional Table indexed by the variable *i* giving the value of the sample number *i* corresponding to the reading of the output of the filter 8 at the instant $t_i$, each element *i* of the said Table being stored in a register *A(i)*.

At step 104, the value in the register *A(i)* is examined in order to determine if it is zero or not (a zero value signifies the absence of a signal corresponding to the characteristics of the filter 8; a value equal to "1" indicates the presence of such a signal).

In the case where the test is negative, the program returns to the start of step 101 in order to re-examine the counter and reinitialise the variables *i* and *X* (step 102). In the case where the test 104 is positive, the variable *i* is increased by one unit and the variable *X* is decreased by one unit (step 105). The program then moves to step 106 in which the register *X* is examined in order to determine if it is zero or not (a zero value signifies that two consecutive signals of level "0" have just been sampled). If a negative result is obtained the program then moves to step 103 in order to proceed to the following sampling.

At the end of these steps 102 to 106, the register *i* contains the value 2 (initial value of *X*) and the registers *A(0)* and *A(1)* contain the value "0".

The phase of processing the samples can then commence and the program moves for this purpose to step 107 in which various registers are initialised:

- the register *Corr,* in which the values of the correlation *Corr* are added together during the entire sampling period, is reset to zero,
- the register *I,* in which the variable *I* corresponding to the length of each sequence of signals of level "1" is recorded, is reset to zero,
- the registers *Histo(0) ... Histo(1253)* constituting a one dimensional Table giving the history of the weight values for all the period of sampling, are reset to zero,
- the register $\rho$ relating to the variable $\rho$ corresponding to the density of the presence of the frequency $1100 \pm 38$ Hz in the signal is reset to zero, and

the register *s*, in which the variable *s* containing the number of samples of value 1 in the last $ON_{min}$ samples is stored, is reset to zero.

At step 108, the counter is examined in order to determine if 8500 ms (maximum time of sampling) have elapsed since step 100. If so the program moves to 134.

The variable *i* varies until the end of sampling. In the embodiment described here, the normal duration of sampling being 8.05 seconds and the frequency of sampling being 100 Hz, 805 samples are taken during this period. The end of sampling is determined from when the 805 samplings have been performed and the last sampling locates an instant of absence of a signal.

At step 109, an examination is made to determine if the sampling has ended. If not the program moves to step 135 which will be described later. If the test is positive, the program moves to step 110 during which the value of the output gate of the filter 8 is read and stored in the register of rank *i* in the registers *A(0) ... A(849)* of the RAM, which will hereinafter by called *A(i)*.

At step 111 the variable $\rho$ is incremented by the value of *A(i)*. This operation, repeated for each sampling, is designed to store in the register $\rho$ the number of samplings corresponding to the presence of the frequency $1100 \pm 38$ Hz (the value in the register $\rho$ is increased by 1 if the signal is present).

Similarly, during step 111, the content of the register *s* is incremented by the value of *A(i)*, this is done in order to retain in the register *s* the number of samples of value 1 in the $ON_{min}$ last samplings. For this purpose, during the course of step 112, an examination is made to determine if the sampling *i* in progress has been located after the sampling of rank $ON_{min}$. If the result of the test is negative, the program moves to step 114. When the test 112 is positive the program moves to step 113 in which the value in the register *s* is decreased by the value of the sample located at the instant $i - ON_{min}$. This makes it possible to retain in the register s, as explained with reference to Figure 7, only the last $ON_{min}$ samples, s being regarded as a stack of $ON_{min}$ filled at the top by the step 111 and emptied at the bottom by the step 113.

At step 114 the value in the register *A(i)* is examined in order to determine if it is zero or not. If it is not the variable *I* is increased by one unit (step 115). The program then moves to step 134 during the course of which the variable *i* is increased by one unit. The main loop is then repeated as long as the filter detects, at each sampling, the presence of a signal corresponding to the characteristics of the filter.

When the filter 8 no longer detects such a signal, the value in the register *A(i)* is zero and the test of step 114 is positive.

According to the preferred embodiment of the invention described here, the series of "1" values are located by the change of an output signal from the filter 8 from the logic state "1" to the logic state "0". The aim of the test 116 is to verify if the current sampling *i*, which corresponds in fact to a state "0" (because the test 114 is positive), corresponds to a transition from "1" to "0". Such a transition is located in test 116 after the preceding sample contained in the register *A(i-1)* equals 1. In the case where the test 116 is positive, the program moves to step 133 which will be described below. In the case where the test 116 is negative, the program moves to step 117.

During step 117, the aspect of the invention described above with reference to Figure 7 is employed and, for this purpose, the value of the register $s$ is examined to determine if it is greater than $ON_{min}$ -2.

In the case where the test 117 is negative, the program moves to step 118 in which the weight $P$ is calculated from the formula:

$$P = l \cdot (l + 1)/2 \qquad\qquad (1)$$

In the case where the test 117 is positive, it is known that at the instant $t_i$ (current sampling $i$) a series of "1" values due to the presence of the frequency 38 Hz to be detected has just been located.

The program then moves to test 119 in which the length $l$ of the sequence located at $i$ is verified. If the test 119 is negative, the series located at $i$ is a series of "1" values interrupted by parasitic signals. Then, in accordance with the characteristic described with reference to Figure 8, in step 123 the weight $P$ of a series of "1" values of nominal value is applied to the said former series, where

$$P = ON \cdot (ON + 1)/2 \qquad\qquad (10)$$

If the test 119 is positive, the program then moves to test 120 in which one verifies if the length $l$ of the sequence of "1" values located at $i$ is longer than $ON_{max}$. If this is the case, in step 121 one applies to this series the weight $P$ of a sequence of maximum length $ON_{max}$, which is

$$P = ON_{max} \cdot (ON_{max} + 1)/2 \qquad\qquad (11)$$

If test 120 is negative, this means that the length $l$ of the series at $i$ is comprised between $ON_{min}$ and $ON_{max}$, and one applies to this series in step 122 the weight $P$:

$$P = l \cdot (l + 1)/2 \qquad\qquad (1)$$

After steps 121, 122 or 123, the program moves to step 124. During step 124, in accordance with a preferred embodiment of the method described with reference to Figure 6, one verifies if the current instant of sampling is situated with certainty beyond $T_{max}$, that is to say the second period of sampling, the latter commencing in the said embodiment at the sample $i$ = 403.

If the test 124 is negative, the program moves to step 125 in which the creation of the history for the current sampling $i$ is performed. The history for each current sampling $i$ is determined by employing a sub-program corresponding to the flow diagram shown in Figure 12c which will be described below.

At the start of step 125, since the test 114 has previously been positive, a succession of "1"s is terminated and, because of this, during step 133 the variable $1$ is set to zero.

If the test 124 is positive, the program moves to step 126, the length $1$ of the series located at $i$ is examined. If the test 126 is positive, the length $l$ of the series located is greater than $ON_{max}$ and as explained above with reference to Figure 8, it may be that the parasitic signals which have extended this series of "1"s distort the calculation of the correlation with a previous series located one period before. In step 130 one therefore allocates to the register of the RAM which will serve in step 132 to calculate the correlation, in accordance with the characteristic described above with reference to Figure 8, the maximum value of the values contained in the registers $Histo$ ($i$-1+$ON_{max}$) to $Histo(i)$.

If the test 126 is negative, the program moves to step 127, in which the value of the register s containing the number of samples of value 1 in the $ON_{min}$ last samples is compared with $ON_{min}$ - 2. If the test 127 is positive, this means that the series located at $i$ corresponds to a series locating the end of a sequence due to the presence of the signal to be detected and the program moves to step 129. However, it may happen, as described with reference to Figure 9, that the said series has been prolonged by parasitic signals in such a manner that its correlation with the series in the preceding period is zero. In this embodiment, it is considered that the number of parasitic samples which prolong a series of "1"s is at most 20 ($\Delta$ = 20). In that case, in step 129 the maximum value of the values contained in the registers $Histo(i \Delta)$ to $Histo(i)$ is assigned to the register $H$ of the RAM.

On the contrary, if the test 127 is negative, the series of "1"s located at $i$ does not correspond to the end of a series of "1"s due to the presence of the signal to be detected. It is due in fact to parasitic signals and the program moves to step 128 in which the microprocessor 16 allocates to the register $H$ the contents of the register $Histo(i)$.

At the end of steps 128, 129 or 130, the value of the history corresponding to the current sampling is contained in the register $H.$ The program then moves to step 131.

In step 131 the history for the current sampling $i$ is created. The history for the current sampling $i$ is determined by employment of a sub-program corresponding to the flow diagram in Figure 12c which will now be described.

It will be recalled that, in accordance with the invention, at the end of each series of "1"s located at $i$ (instant $t_i$), detected in this case by the test 116, a portion of the history comprised between the instants $(t_i + T_{min})$ and $(t_i + T_{max})$ is determined by applying the rule explained above with reference to Figures 4 and 5.

In addition, in this embodiment, the rule explained above with reference to Figure 6 is applied.

Thus, in step 131, the value of the variable $Histo(j)$ is the minimum value in the weight of the series of "1"s which has ended at the current sampling $i$ (then contained in the register $P)$ and the value of the history of the current sampling $i$ contained in the register $H.$

The sub-program of Figure 12c runs as follows:

In step 200, the variable $j$ stored in the register $j$ is set to a value $i$ - 53 + 350 $(i + Z_{min})$ corresponding to the start of the said portion of the history $(t_i + T_{min})$.

In step 201, a verification is made of whether the variable $j$ is less than the value $i$ + 53 + 350 $(i + Z_{max})$ corresponding to the upper end of the said portion $(t_i + T_{max})$. As long as the variable $j$ is less than the value of the upper end (branch YES), during step 202 the value $Histo(j)$ is determined by applying the rule explained above.

Thus the weight $P$ is stored if the latter is greater than the value $Histo(j)$ previously stored and the latter value is retained in the opposite case.

In step 203 the variable $j$ is incremented so that the loop 201, 203 is repeated as long as the variable $j$ does not correspond to the extreme end value of the portion $(i + ON_{max})$.

When this is the case (test 201 negative) the sub-program of Figure 12b is terminated and the main program moves to 132.

In step 132 the program then calculates the correlation level $\Sigma Corr_j.$

Calculation of the instantaneous correlation is performed by using the formula:

$$Corr_j = P_j.Histo(j) \tag{5}$$

In the program this calculation is done by multiplication of the history value for the current sampling $i$ (value in the register $H)$ by the value contained in the $Weight$ register and the cumulative value of the figures is registered in the register $Corr.$

The main program then moves to step 133 in which the variable $l$ $is$ set to zero (because the series of "1"s has just ended) and then, during the course of step 134, the variable $i$ is incremented.

As explained above, the set of steps in the loop 108 - 134 is recommenced as long as the test 109 is not negative. When the test 109 is negative, this means that the variable $i$ is greater than $n$ and that also, given that the last sampling located corresponds to the absence of the signal, sampling is ended. The main program then moves to step 135.

In accordance with one aspect of the preferred method of employing the invention described above, in step 135 the proportion $\rho$ of the frequencies 1062-1138 Hz in the signal sampled is calculated. This calculation is performed by dividing the number of samplings in register $\rho,$ which contains the number of samplings of level "1", by the total number of samplings contained in the variable $i.$

It will be recalled that, in accordance with the invention, detection occurs when the correlation value is greater than a predetermined threshold value. In this method of use, there is a plurality of threshold values depending on the value of $\rho$, each of the thresholds having been determined experimentally. These thresholds are defined in Table II and stored in the memory zones of the read only memory 22 described above.

During step 137 the value in the register $\rho$ of the RAM 23 is compared with the possible values of proportions in the registers $TabThreshold$ of the ROM 22 and the corresponding threshold is selected and stored in the $Threshold$ register of the RAM.

During test 137, and in accordance with the invention, the values of $Corr$ and of $Threshold$ are compared. When the test 137 is positive $(Corr > Threshold)$ this means that a CNG is detected. The program moves to 139.

When, on the contrary, the test 137 is negative $(Corr < Threshold),$ the program moves to 138 and this means that no CNG is detected.

In steps 138 and 139 the main program in Figures 11a or 11b is returned to.

It will be noted, first of all, that in the preferred embodiment sampling is effected over two $T_{max}$ periods. A sampling, followed by a calculation of the correlation over three or more $T_{max}$ periods would be able to give a more reliable result. The present invention is therefore in no way limited to sampling over two $T_{max}$ periods.

Alternatively, as in the preferred embodiment, the history may be calculated and a correlation obtained as explained above during two $T_{max}$ periods. If a signal is detected, the calculation is interrupted. However, in the case in which at the end of two $T_{max}$ periods the signal has not been detected, creation of the history and calculation of the correlation may be continued during a third or even a fourth or more $T_{max}$ period. This alternative is useful in the case where a rapid response is required and in the case where the signal to be detected (CNG in particular) possesses characteristics such that there is little probability of concluding it is present among a set of signals when it is in fact absent.

Similarly in an alternative, in the case where it has been possible to sample, create a history and calculate the correlation over numerous periods, it is possible to apply the method several times in succession, in detection operations conducted, for example, over a duration of two $T_{max}$, and then to compare the results obtained during these various detection operations, so as to improve the overall reliability of the detection. This alternative is useful principally in the case of a signal which is difficult to clean, where there is a risk of a mistake made during the creation of the history, at the start of the detection phase, propagating itself over the entire duration of sampling.

Similarly, alternatively, detection of the CNG may be extended in this way, in the case of an answering machine, during the period allocated to the recording of a voice message (ICM) coming from a caller.

TABLE II

| PROPORTION PRESENT | THRESHOLD VALUE |
| --- | --- |
| $0 < \rho < 0.2$ | 30,000 |
| $0.2 < \rho < 0.3$ | 1,000,000 |
| $0.3 < \rho < 0.75$ | 1,500,000 |
| $0.75 < \rho < 1$ | 3,000,000 |

TABLE I

| Location | Series | Length | Weight | Creation of | Corr$_j$ | $\Sigma Corr_j$ |
|---|---|---|---|---|---|---|
| $i$ or $j$ | $S_i$, $S_j$ | $\lambda$ | $P_i$ or $P_j$ | history | | |
| start $i$ = 0 | | | | | | |
| $t_i$ , $i$ = 51 | $S_{51}$ | 2 | $P_{51}$ = 3 | fig. 5a | | |
| $t_i$ , $i$ = 101 | $S_{101}$ | 25 | $P_{101}$ = 325 | fig. 5b | | |
| $t_i$ , $i$ = 201 | $S_{201}$ | 50 | $P_{201}$ = 1275 | fig. 5c | | |
| $t_i$ , $i$ = 251 | $S_{251}$ | 2 | $P_{251}$ = 3 | fig. 5d | | |
| $T_{min}$ : $i$ = 297 | | | | | | |
| $t_i$ , $i$ = 326 | $S_{326}$ | 25 | $P_{326}$ = 325 | fig. 5e | | |
| $t_i$ , $i$ = 401 | $S_{401}$ | 2 | $P_{401}$= 3 | fig. 5f | | |
| $T_{max}$: $i$ = 403 | | | | | | |
| $t_j$ , $j$ = 451 | $S_{451}$ | 2 | $P_{451}$ = 3 | fig. 5g | 3xHisto (451)=3x325=975 | 0 + 975 |
| $t_j$ , $j$ = 551 | $S_{551}$ | 50 | $P_{551}$ = 1275 | fig. 5h | 1276xHisto(551)=1275x1275= 1.625.625 | 1.626.600 |
| $t_j$ , $j$ = 576 | $S_{576}$ | 2 | $P_{576}$ = 3 | fig. 5i | 3xHisto(576)=3x1275=3825 | |
| $t_j$ , $j$ = 651 | $S_{651}$ | 25 | $P_{651}$ = 325 | fig. 5j | 325xHisto(651)=325x325=105625 | 1.630.425 |
| $t_j$ , $j$ = 751 | $S_{751}$ | 25 | $P_{751}$ = 325 | fig. 5k | 325xHisto(751)=325x3=975 | 1.736.050 |
| end : $j$ = 805 | | | | | | 1.737.025 |

**Claims**

1. Method for detecting the presence of a periodic signal amongst a set of signals, the said signal having a periodic repetition of at least one frequency during at least one predetermined duration $(T_{ON})$, the said frequency, the period $T$ of the periodic repetition and the said duration $(T_{ON})$ being given respective predetermined tolerances $(dT, dT_{ON})$, including a step during which:

   a) in a so-called "discrimination" phase, the said frequency is discriminated from the other frequencies of the set of signals by filtering means and an output signal is delivered at two levels representing respectively the presence or absence of the said frequency in the said set of signals,
   b) in a so-called "sampling" phase, a time origin is fixed and from this the level thus obtained is sampled in n signal samples,

   method characterised in that in addition:

   c) in a so-called "detection and weighting" phase, the occurrence is located, on the time scale at instants $t_i$, of a series of successive samples $S_i$ of the same level corresponding to the presence of the said frequency, for which a so-called "weight" value $P_i$ representing the number of samples of the said level of the said series is calculated,
   d) in a so-called "creation of a history" phase, for each series $S_i$, in a first future time interval, a value $Histo(j)$ representing the weight $P_i$ is projected,
   e) in a so-called "correlation" phase, if applicable an instantaneous degree of correlation $(Corr_j)$ between the weight $P_j$, calculated for the series $S_j$ of the instant $t_j$, and the value $Histo(j)$, corresponding to the weight $P_i$ relating to the series $S_i$ located at $t_i$, is calculated,
   f) in a so-called "decision" phase, the presence or absence of the signal is deduced in accordance with the said instantaneous correlation degrees.

2. Method for detecting the presence of a periodic signal amongst a set of signals, the said signal having a periodic repetition of at least one frequency during at least one predetermined duration $(T_{ON})$, the said frequency, the repetition period $T$ and the said duration $(T_{ON})$ being given respective predetermined tolerances $(dT, dT_{ON})$, including a step during which:

   a) in a so-called "discrimination" phase, the said frequency is discriminated from the other frequencies of the set of signals by filtering means and an output signal is delivered at two levels representing respectively the presence or absence of the said frequency in the said set of signals,
   b) in a so-called "sampling" phase, a time origin is fixed and from this the level thus obtained is sampled in $n$ signal samples,

   method characterised in that in addition:

   c) in a so-called "detection and weighting" phase, the occurrence is located, on the time scale at instants $t_i$, of a series of successive samples $S_i$ of the same level corresponding to the presence of the said frequency, for which a so-called "weight" value $P_i$ representing the number of samples of the said level of the said series is calculated,
   d) in a so-called "creation of a history" phase, during the first maximum period $T_{max}$, where $T_{max} = T + dT$, for each series $S_i$, a value $Histo(j)$ representing the weight $P_i$ in a first future time interval is projected, and for each series $S_j$ located at the instant $t_j$ occurring after the elapse of the first maximum period $T_{max}$, where $T_{max} = T + dT$, after the time origin, a value $Histo(k)$ representing $Histo(j)$ and $P_j$ in a second future time interval is projected,
   e) in a so-called "correlation" phase, if applicable an instantaneous degree of correlation $(Corr_j)$ between the weight $P_j$, calculated for the series $S_j$ of the instant $t_j$, and the value $Histo(j)$, corresponding to the weight $P_i$ relating to the series $S_i$, is calculated,
   f) in a so-called "decision" phase, the presence or absence of the signal is deduced in accordance with the said instantaneous correlation degrees.

3. Method according to claim 2, characterized in that the second future interval is comprised between $t_j + T - dT$ and $t_j + T + dT$ and in that the value $Histo(k)$ is equal to the minimum between value $Histo(j)$ and $P_j$ at each instant $t_k$ in the said second future interval to which a higher value has not previously been allocated.

**4.** Method according to any one of claims 1 to 3, characterized in that the $n$ signal samples obtained during the sampling phase extend over a duration equal to at least two maximum periods $T_{max}$, where $T_{max} = T + dT$, taking account of the said tolerance $dT$ applying to the period $T$.

**5.** Method according to any one of claims 1 to 4, characterized in that the first future time intervals are between $t_i + T - dT$ and $t_i + T + dT$.

**6.** Method according to any one of claims 1 to 5, characterized in that the value $Histo(j)$ is allocated, giving it the value $P_i$, to each instant $t_j$ of the said future time interval to which a higher value has not previously been allocated.

**7.** Method according to any one of claims 1 to 6, characterized in that the weight value of the series in question is a direct function of the number $l$ of samples in the series in question.

**8.** Method according to any one of claims 1 to 7, characterized in that the value of the weight of the series in question is:

- a direct function of the number $l$ of samples in the said series if the said number $l$ is, on the one hand, less than the number of samples $ON_{max}$ which could be delivered during the said predetermined duration $(T_{ON})$ increased by its tolerance $(dT_{ON})$ and, on the other hand, greater than the number of samples $ON_{min}$ which could be delivered during the said predetermined duration $(T_{ON})$ minus its tolerance $(dT_{ON})$,
- a predetermined constant if the number $l$ is greater than the number of samples $ON_{max}$,
- a direct function of the number $l$ if the latter is less than the number of samples $ON_{min}$ and if the number s of samples of a level representing the presence of a signal during the period $T_{ON}$
- $dT_{ON}$ preceding the current instant is less than a predetermined limit number,
- a predetermined constant if the number $l$ is less than the number of samples which could be delivered in $T_{min}$ and if the number $s$ of samples of a level representing the presence of a signal during the period $T_{ON} - dT_{ON}$ preceding the current instant is greater than the said predetermined limit number.

**9.** Method according to either one of claims 7 or 8, characterized in that the said direct function enabling the weight to be calculated is:

$$P = l \cdot (l + 1)/2$$

**10.** Method according to any one of claims 1 to 9, characterized in that each series $S_i$, $S_j$ is located at the instant $t_i$ or $t_j$ following its end.

**11.** Method according to any one of claims 1 to 10, characterized in that the said degree of instantaneous correlation is evaluated by means of the formula:

$$Corr_j = P_j \cdot Histo(j)$$

**12.** Method according to any one of claims 2 to 11, characterized in that, for each series $S_j$ located at the instant $t_j$ arriving after the elapse of the first maximum period $T_{max}$ after the time origin, if the number $\Sigma$ of samples in the series $S_j$ in question is greater than the number of samples $(ON_{max})$ which could be generated in the said predetermined duration $T_{ON}$ increased by its tolerance $(dT_{ON})$, the said degree of instantaneous correlation is calculated by means of the formula:

$$Corr_j = P_j \cdot Max \{Histo [j - l + ON_{max}], ..., Histo[j]\}.$$

**13.** Method according to any one of claims 2 to 12, characterized in that, for each series $S_j$ located at the instant $t_j$ arriving after the elapse of the first maximum period $T_{max}$ after the time origin, if, on the one hand, the number $l$ of samples in the series $S_j$ in question is less than the number of samples $(ON_{max})$ which could be generated in the said predetermined duration $T_{ON}$ increased by its tolerance $(dT_{ON})$ and, on the other hand, if the number of samples $s$ of a level representing the presence of a signal during the period of duration $(T_{ON} - dT_{ON})$ preceding the current instant $t_j$ is greater than a predetermined threshold number, the said degree of instantaneous correlation is calculated by means of the formula:

$$Corr_j = P_j \cdot Max \{Histo [j - \Delta], ..., Histo[j]\}$$

where $\Delta$ is a predetermined shift.

14. Method according to any one of claims 11 to 13, characterized in that, in the decision phase, in order to deduce the presence or absence of the signal to be detected, the degrees of instantaneous correlation $(Corr_j)$ evaluated for the $n$ samples are added together, the total is compared with a predetermined threshold value and the presence or absence of a signal is deduced according to the result of this comparison.

15. Method according to claim 14, characterized in that, prior to the said comparison, a measurement is made throughout the entire duration of the sampling of the proportion $\rho$ of samples representing the presence of a signal and a threshold value to be taken into consideration is selected as a function of the said measured proportion from a plurality of threshold values.

16. Method according to any one of claims 1 to 15, characterized in that, in order to fix the said time origin, the signal is sampled and the occurrence of a first predetermined number of successive samples of a level representing the absence of the said frequency is awaited.

17. Method according to any one of claims 1 to 16, characterized in that the sampling of the output signal of the filtering means is stopped after a second predetermined number of successive samples representing the absence of the said frequency has been detected.

18. Method according to claim 17, characterized in that should the said second number of successive samples representing the absence of the said frequency not be detected, the sampling is stopped at the end of a predetermined time measured from the start of the sampling.

19. Method according to any one of claims 1 to 18, characterized in that the signal to be detected is a CNG signal sent over a telephone line by a calling facsimile machine and in that the said set of signals consist, partly at least, of a plurality of signals sent by a telephone answering machine.

20. Application of the method according to claim 19 to the control of switching means for a communications system, incorporating in particular telephone and facsimile functions, between a facsimile mode if the presence of a CNG signal is detected and a telephone communication mode in the contrary case.

21. Device for detecting the presence of a periodic signal amongst a set of signals, the said signal having a periodic repetition of at least one frequency during at least one predetermined duration $(T_{ON})$, the said frequency, the repetition period $T$ and the said duration $(T_{ON})$ being given respective predetermined tolerances $(dT, dT_{ON})$, the said device comprising:

   - means (8) for discriminating the said frequency from the other frequencies of the set of signals adapted to deliver an output signal at two levels respectively representing the presence or absence of the said frequency in the said set of signals,
   - sampling means (16, 24) adapted to sample the level thus obtained,

   the said device being characterized in that it also comprises:

   - processing means (16, 22, 23) comprising in particular calculation (16) and storage (23) means adapted to:

      . fix a time origin and control the sampling means in order to sample the signal output from the discrimination means so as to obtain $n$ output signals,
      . locate on the time scale at instants $t_i$ the occurrence of a series of successive samples $S_i$ of the same level corresponding to the presence of the said frequency for which the processing means (16, 22, 23) calculate a so-called "weight" value $P_i$ representing the number of values of the said level in the said series,
      . determine the end of a first maximum period $T_{max}$, where $T_{max} = T + dT$, and, during the latter, for each series $S_i$, project in a first future time interval a value $Histo(j)$ representative of the weight $P_i$,
      . calculate, where appropriate, a degree of instantaneous correlation $(Corr_j)$ between the weight $P_j$ calculated for the series $S_j$ of instant $t_j$, and the value $Histo(j)$ corresponding to the weight $P_i$ relating to the series $S_i$ located at $t_i$, and

. deduce the presence or absence of a signal in accordance with the said instantaneous correlation degrees.

22. Device for detecting the presence of a periodic signal amongst a set of signals, the said signal having a periodic repetition of at least one frequency during at least one predetermined duration $(T_{ON})$, the said frequency, the repetition period $T$ and the said duration $(T_{ON})$ being given respective predetermined tolerances $(dT, dT_{ON})$, the said device comprising:

- means (8) for discriminating the said frequency from the other frequencies of the set of signals adapted to deliver an output signal at two levels respectively representing the presence or absence of the said frequency in the said set of signals,
- sampling means (16, 24) adapted to sample the level thus obtained,

the said device being characterized in that it also comprises:

- processing means (16, 22, 23) comprising in particular calculation (16) and storage (23) means adapted to:

  . fix a time origin and control the sampling means in order to sample the signal output from the discrimination means so as to obtain $n$ output signals,
  . locate on the time scale at instants $t_i$ the occurrence of a series of successive samples $S_i$ of the same level corresponding to the presence of the said frequency for which the processing means (16, 22, 23) calculate a so-called "weight" value $P_i$ representing the number of values of the said level in the said series,
  . determine the end of a first maximum period $T_{max}$, where $T_{max} = T + dT$, and, during the latter, for each series $S_i$, project in a first future time interval a value $Histo(j)$ representative of the weight $P_i$ and, for each series $S_j$ located at an instant $t_j$ occurring after the elapse of the first maximum period $T_{max}$, where $T_{max} = T + dT$ after the time origin, project in a second future time interval a value $Histo(k)$ representative of $Histo(j)$ and $P_j$,
  . calculate, where appropriate, a degree of instantaneous correlation $(Corr_j)$ between the weight $P_j$ calculated for the series $S_j$ of instant $t_j$, and the value $Histo(j)$ corresponding to the weight $P_i$ relating to the series $S_i$ located at $t_i$, and
  . deduce the presence or absence of a signal in accordance with the said instantaneous correlation degrees.

23. Device according to claim 22 characterized in that the calculating means (16) and storage means (23) are, in addition, adapted so that the second future time interval is between $t_j + T - dT$ and $t_j + T + dT$ and so that the value $Histo(k)$ is equal to the minimum between $Histo(j)$ and $P_j$ at each instant $t_k$ of the second future time interval to which a higher value has not previously been allocated.

24. Device according to any one of claims 21 to 23, characterized in that the calculating means (16) and storage means (23) are designed so that the $n$ signal samples are obtained in a period at least equal to two maximum periods $T_{max}$ where $T_{max} = T + dT$, taking account of the said tolerance $(dT)$ given to the period $T$.

25. Device according to any one of claims 21 to 24, characterized in that the calculating means (16) and storage means (23) are designed so that the first future time intervals are between $t_i + T - DT$ and $t_i + T + DT$.

26. Device according to any one of claims 21 to 25, characterized in that the calculating means (16) and storage means (23) are designed so that the value $Histo(j)$ is obtained by allocating it the value $P_i$ at each instant $t_j$ in this future interval to which a higher value has not previously been allocated.

27. Device according to any one of claims 21 to 26, characterized in that the processing means (16, 22, 23) are adapted to calculate the value of the said weight as being a direct function of the number of samples of the series in question.

28. Device according to any one of claims 21 to 27, characterized in that the processing means (16, 22, 23) are adapted to determine the weight of the series in question as being:

- a direct function of the number $I$ of samples of the said series if the said number $I$ is, on the one hand, less than the number of samples $ON_{max}$ which could be delivered during the said predetermined duration $(T_{ON})$ increased by its tolerance $(dT_{ON})$ and, on the other hand, greater than the number of samples $ON_{min}$ which could be delivered during the said predetermined duration $(T_{ON})$ minus its tolerance $(dT_{ON})$,

- a predetermined constant if the number $l$ is greater than the number of samples $ON_{max}$,
- a direct function of the number $l$ if the latter is less than the number of samples $ON_{min}$ and if the number $s$ of samples of a level representing the presence of a signal during the period $T_{ON} - dT_{ON}$ preceding the current instant is less than a predetermined limit number,
- a predetermined constant if the number $l$ is less than the number of samples which could be delivered in $T_{min}$ and if the number $s$ of samples of a level representing the presence of a signal during the period $T_{ON} - dT_{ON}$ preceding the current instant is greater than the said predetermined limit number.

**29.** Device according to either claim 27 or 28, characterized in that the processing means (16, 22, 23) use, in order to calculate the weight, the formula:

$$P = l . ( l + 1)/2.$$

**30.** Device according to any one of claims 21 to 29, characterized in that the processing means (16, 22, 23) are adapted to locate each series $S_i$, $S_j$ at the instant $t_i$ following its end.

**31.** Device according to any one of claims 26 to 30, characterized in that the processing means (16, 22, 23) are adapted to evaluate the said degree of instantaneous correlation by means of the formula:

$$Corr_j = P_j . Histo(j).$$

**32.** Device according to any one of claims 21 to 31, characterized in that the processing means (16, 22, 23) are designed so that, for each series $S_j$ located at the instant $t_j$ arriving after the expiry of the first maximum period $T_{max}$ after the time origin, if the number $l$ of samples in the series $S_j$ in question is greater than the number of samples $(ON_{max})$ which could be generated in the said predetermined duration $T_{ON}$ increased by its tolerance $(dT_{ON})$, the processing means (16, 22, 23) calculate the said degree of instantaneous correlation by means of the formula:

$$Corr_j = P_j . Max \{Histo [j - l + ON_{max}], ..., Histo[j]\}$$

**33.** Device according to any one of claims 26 to 32, characterized in that the processing means (16, 22, 23) are designed so that, for each series $S_j$ located at the instant $t_j$ arriving after the elapse of the first maximum period $T_{max}$ after the time origin, if, on the one hand, the number $l$ of samples in the series $S_j$ in question is less than the number of samples $(ON_{max})$ which could be generated in the said predetermined duration $T_{ON}$ increased by its tolerance $(dT_{ON})$ and, on the other hand, if the number of samples $s$ of a level representing the presence of a signal during the period of duration $(T_{ON} - dT_{ON})$ preceding the current instant $t_j$ is greater than a predetermined limit number, the processing means (16, 22, 23) calculate the said degree of instantaneous correlation by means of the formula:

$$Corr_j = P_j . Max \{Histo [j - \Delta], ..., Histo[j]\}$$

where $\Delta$ is a predetermined shift.

**34.** Device according to any one of claims 31 to 33, characterized in that the said processing means (16, 22, 23) are designed so that, in order to deduce the presence or absence of the signal to be detected, the degrees of instantaneous correlation $(Corr_j)$ calculated for the n samples are added together, the total is compared with a predetermined threshold value and the presence or absence of a signal is deduced according to the result of this comparison.

**35.** Device according to claim 34, characterized in that the said processing means (16, 22, 23) are designed so that, prior to the said comparison, they measure throughout the entire duration of the sampling the proportion $\rho$ of samples representing the presence of a signal and a threshold value to be taken into consideration is selected as a function of the said measured proportion from a plurality of threshold values.

**36.** Device according to any one of claims 21 to 35, characterized in that the processing means (16, 22, 23) are designed so that, in order to fix the said time origin, they sample the signal and await the occurrence of a first predetermined number of successive samples of a level representing the absence of the said frequency.

**37.** Device according to any one of claims 21 to 36, characterized in that the processing means (16, 22, 23) are adapted to control the shutdown of the means for sampling the output signal of the filtering means after a second predetermined number of successive samples representing the absence of the said frequency has been detected.

**38.** Device according to claim 37, characterized in that the processing means (16, 22, 23) are also designed so that, should they not detect the said second number of successive samples representing the absence of the said frequency, they stop the sampling at the end of a predetermined time measured from the start of the sampling.

**39.** Device according to any one of claims 21 to 38, characterized in that the discrimination means (8) are adapted to discriminate the frequencies comprised between 1062 and 1138 Hz.

**40.** Telecommunication installation incorporating a device (8, 16, 22-24) in accordance with any one of claims 21 to 39.

**41.** Facsimile machine incorporating a device (8, 16, 22-24) in accordance with any one of claims 21 to 39.

**42.** Facsimile machine according to claim 41, characterized in that it also incorporates a telephone answering device (90).

**43.** Facsimile machine according to either one of claims 41 and 42, characterized in that it also incorporates a device for detecting when the receiver has been lifted (4).

**44.** Facsimile machine according to any one of claims 41 to 43, characterized in that it also incorporates an electronic switch (CML 3) of which:

- an input (30) is directly connected to a line interface (20) of the facsimile machine,
- an output (31) is connected to an input (21) connecting with an external answering machine (2) and/or a telephone handset (35),
- an output (32) is connected to an input (61) of a network monitoring unit (6), and
- a control input (33) is connected to the processing means (16).

**45.** Facsimile machine according to claim 44, characterized in that it also incorporates a second electronic switch (7) of which:

- a control input (73) is connected to the processing means (16),
- an analogue output (70) is connected to the input (80) of a discrimination means (8),
- an input (72) is connected to the analogue output input (91) of the built-in answering machine (90), and
- an input (71) is connected to an input (21) connecting with an external answering machine (2) and/or a telephone handset (35).

**Patentansprüche**

**1.** Verfahren zum Erfassen des Vorhandenseins eines periodischen Signals zwischen einem Satz von Signalen, welches Signal eine periodische Wiederholung von zumindest einer Frequenz während zumindest einer vorbestimmten Dauer $(T_{ON})$ aufweist, wobei der Frequenz, der Periode $T$ der periodischen Wiederholung und der Dauer $(T_{ON})$ jeweils vorbestimmte Toleranzen $(dT, dT_{ON})$ gegeben sind, beinhaltend einen Schritt, während dem:

a) in einer sogenannten "Unterscheidungs"-Phase die Frequenz von den anderen Frequenzen des Satzes von Signalen durch eine Filtereinrichtung unterschieden und ein Ausgangssignal auf zwei Pegeln geliefert wird, die jeweils das Vorhandensein oder Fehlen der Frequenz in dem Satz von Signalen repräsentieren,

b) in einer sogenannten "Abtast"-Phase ein Zeitursprung festgelegt wird und von diesem der so erhaltene Pegel in $n$ Signalabtastwerte abgetastet wird, wobei

das Verfahren dadurch gekennzeichnet ist, daß zusätzlich

c) in einer sogenannten "Erfassungs- und Gewichtungs"-Phase das Auftreten auf dem Zeitmaßstab zu Zeitpunkten $t_i$ in einer Serie von aufeinanderfolgenden Abtastwerten $S_i$ desselben Pegels entsprechend dem Vorhandensein der Frequenz lokalisiert ist, für welche ein sogenannter "Gewichts"-Wert $P_i$, der die Anzahl von Abtastwerten des Pegels der Serie repräsentiert, berechnet wird,

d) in einer sogenannten "Geschichtserzeugungs"-Phase für jede Serie $S_i$ in einem ersten zukünftigen Zeitintervall ein Wert $Histo(j)$, der das Gewicht $P_i$ repräsentiert, projiziert wird,

e) in einer sogenannten "Korrelations"-Phase, falls anwendbar, ein augenblicklicher Korrelationsgrad $(Corr_j)$ zwischen dem für die Serie $S_j$ des Augenblicks $t_j$ berechneten Gewicht $P_j$ und dem Wert $Histo(j)$ entsprechend dem sich auf die bei $t_i$ lokalisierte Serie $S_i$ beziehenden Gewicht $P_i$ berechnet wird, und

f) in einer sogenannten "Entscheidungs"-Phase in Übereinstimmung mit dem augenblicklichen Korrelationsgrad auf das Vorhandensein oder Fehlen des Signals geschlossen wird.

2. Verfahren zum Erfassen des Vorhandenseins eines periodischen Signals zwischen einem Satz von Signalen, welches Signal eine periodische Wiederholung von zumindest einer Frequenz während zumindest einer vorbestimmten Dauer $(T_{ON})$ aufweist, wobei der Frequenz, der Wiederholungsperiode $T$ und der Dauer $(T_{ON})$ jeweils vorbestimmte Toleranzen $(dT, dT_{ON})$ gegeben sind, beinhaltend einen Schritt, während dem:

a) in einer sogenannten "Unterscheidungs"-Phase die Frequenz von den anderen Frequenzen des Satzes von Signalen durch eine Filtereinrichtung unterschieden und ein Ausgangssignal auf zwei Pegeln geliefert wird, die jeweils das Vorhandensein oder Fehlen der Frequenz in dem Satz von Signalen repräsentieren,

b) in einer sogenannten "Abtast"-Phase ein Zeitursprung festgelegt wird und von diesem der so erhaltene Pegel in $n$ Signalabtastwerte abgetastet wird, wobei

das Verfahren dadurch gekennzeichnet ist, daß zusätzlich

c) in einer sogenannten "Erfassungs- und Gewichtungs"-Phase das Auftreten auf dem Zeitmaßstab zu Zeitpunkten $t_i$ aus einer Serie von aufeinanderfolgenden Abtastwerten $S_i$ desselben Pegels entsprechend dem Vorhandensein der Frequenz lokalisiert ist, für welche ein sogenannter "Gewichts"-Wert $P_i$, der die Anzahl von Abtastwerten des Pegels der Serie repräsentiert, berechnet wird,

d) in einer sogenannten "Geschichtserzeugungs"-Phase während der ersten Maximumperiode $T_{max}$, worin $T_{max} = T + dT$, für jede Serie $S_i$ ein Wert $Histo(j)$, der das Gewicht $P_i$ in einem ersten zukünftigen Zeitintervall repräsentiert, projiziert wird, und für jede in dem nach dem Verstreichen der ersten Maximumperiode $T_{max}$, worin $T_{max} = T + dT$, nach dem Zeitursprung auftretenden Augenblick $t_j$ lokalisierte Serie $S_j$ ein Wert $Histo(k)$, der $Histo(j)$ und $P_j$ in einem zweiten zukünftigen Zeitintervall repräsentiert, projiziert wird,

e) in einer sogenannten "Korrelations"-Phase, falls anwendbar, ein augenblicklicher Korrelationsgrad $(Corr_j)$ zwischen dem für die Serie $S_j$ des Augenblicks $t_j$ berechneten Gewicht $P_j$ und dem Wert $Histo(j)$ entsprechend dem sich auf die Serie $S_i$ beziehenden Gewicht $P_i$ berechnet wird, und

f) in einer sogenannten "Entscheidungs"-Phase in Übereinstimmung mit dem augenblicklichen Korrelationsgrad auf das Vorhandensein oder Fehlen des Signals geschlossen wird.

3. Verfahren nach Anspruch 2, dadurch gekennzeichnet, daß das zweite zukünftige Intervall zwischen $t_j + T - dT$ und $t_j + T + dT$ liegt, und dadurch, daß der Wert $Histo(k)$ gleich dem Minimum zwischen dem Wert $Histo(j)$ und $P_j$ in jedem Augenblick $t_k$ in dem zweiten zukünftigen Intervall ist, dem vorangehend kein höherer Wert allokiert wurde.

4. Verfahren nach einem der Ansprüche 1 bis 3, dadurch gekennzeichnet, daß sich die während der Abtastphase erhaltenen $n$ Signalabtastwerte über eine Dauer gleich zumindest zwei Maximumperioden $T_{max}$, worin $T_{max} = T + dT$, erstrecken, wobei die auf die Periode $T$ Anwendung findende Toleranz $dT$ berücksichtigt wird.

5. Verfahren nach einem der Ansprüche 1 bis 4, dadurch gekennzeichnet, daß die ersten zukünftigen Zeitintervalle zwischen $t_i + T - dT$ und $t_i + T + dT$ liegen.

6. Verfahren nach einem der Ansprüche 1 bis 5, dadurch gekennzeichnet, daß der Wert $Histo(j)$, diesem den Wert $P_i$ gebend, zu jedem Augenblick $t_j$ des zukünftigen Zeitintervalls allokiert wird, dem vorangehend kein höherer Wert allokiert wurde.

7. Verfahren nach einem der Ansprüche 1 bis 6, dadurch gekennzeichnet, daß der Gewichtswert fraglichen Serie eine direkte Funktion der Anzahl $l$ von Abtastwerten in der fraglichen Serie ist.

**8.** Verfahren nach einem der Ansprüche 1 bis 7, dadurch gekennzeichnet, daß der Wert des Gewichts der fraglichen Serie ist:

- eine direkte Funktion der Anzahl *l* von Abtastwerten in der Serie, falls die Anzahl *l* einerseits kleiner ist als die Anzahl von Abtastwerten $ON_{max}$, welche während der vorbestimmten, um ihre Toleranz $(dT_{ON})$ erhöhte Dauer geliefert werden könnten, und andererseits größer ist als die Anzahl von Abtastwerten $ON_{min}$, welche während der vorbestimmten Dauer $(T_{ON})$ minus deren Toleranz $(dT_{ON})$ geliefert werden könnte,
- eine vorbestimmte Konstante, falls die Anzahl *l* größer ist als die Anzahl von Abtastwerten $ON_{max}$,
- eine direkte Funktion der Anzahl *l*, falls die letztgenannte kleiner ist als die Anzahl von Abtastwerten $ON_{min}$ und falls die Anzahl *s* von Abtastwerten eines Pegels, der das Vorhandensein eines Signals während der dem gegenwärtigen Augenblick vorangehenden Periode $T_{ON} - dT_{ON}$ repräsentiert, kleiner als eine vorbestimmte Grenzanzahl ist,
- eine vorbestimmte Konstante, falls die Anzahl *l* kleiner ist als die Anzahl von Abtastwerten, welche in $T_{min}$ geliefert werden könnte, und falls die Anzahl *s* von Abtastwerten eines Pegels, der das Vorhandensein eines Signals während der dem gegenwärtigen Augenblick vorangehenden Periode $T_{ON} - dT_{ON}$ repräsentiert, größer ist als die vorbestimmte Grenzanzahl.

**9.** Verfahren nach einem der Ansprüche 7 oder 8, dadurch gekennzeichnet, daß die die Berechnung des Gewichts ermöglichende direkte Funktion

$$P = l \cdot (l + 1)/2$$

ist.

**10.** Verfahren nach einem der Ansprüche 1 bis 9, dadurch gekennzeichnet, daß jede Serie $S_i$, $S_j$ in dem Augenblick $t_i$ oder $t_j$ oder auf dessen Ende folgend lokalisiert ist.

**11.** Verfahren nach einem der Ansprüche 1 bis 10, dadurch gekennzeichnet, daß der Grad der augenblicklichen Korrelation mittels der Formel:

$$Corr_j = P_j \cdot Histo(j)$$

evaluiert wird.

**12.** Verfahren nach einem der Ansprüche 2 bis 11, dadurch gekennzeichnet, daß, für jede Serie $S_j$, die in dem Augenblick $t_j$ lokalisiert ist, der nach dem Verstreichen der ersten Maximumperiode $T_{max}$ nach dem Zeitursprung eintrifft, falls die Anzahl $\Sigma$ von Abtastwerten in der fraglichen Serie $S_j$ größer ist als die Anzahl von Abtastwerten $(ON_{max})$, welche in der um ihre Toleranz $(dT_{ON})$ erhöhten vorbestimmten Dauer $T_{ON}$ erzeugt werden könnten, der Grad augenblicklicher Korrelation mittels der Formel:

$$Corr_j = P_j \cdot Max \{Histo [j - l + ON_{max}], ..., Histo[j]\}$$

berechnet wird.

**13.** Verfahren nach einem der Ansprüche 2 bis 12, dadurch gekennzeichnet, daß, für jede in dem nach dem Verstreichen der ersten Maximumperiode $T_{max}$ nach dem Zeitursprung eintreffenden Augenblick $t_j$ lokalisierte Serie $S_j$ dann, wenn einerseits die Anzahl *l* von Abtastwerten in der fraglichen Serie $S_j$ kleiner ist als die Anzahl von Abtastwerten $(ON_{max})$, welche in der um ihre Toleranz $(dT_{ON})$ erhöhten vorbestimmten Dauer $T_{ON}$ erzeugt werden könnten, und dann, wenn andererseits die Anzahl von Abtastwerten *s* eines das Vorhandensein eines Signals während der dem gegenwärtigen Augenblick $t_j$ vorangehenden Periode der Dauer $(T_{ON} - dT_{ON})$ größer ist als eine vorbestimmte Schwellenanzahl, der Grad augenblicklicher Korrelation mittels der Formel:

$$Corr_j = P_j \cdot Max \{Histo [j - \Delta], ..., Histo[j]\}$$

berechnet wird, worin $\Delta$ eine vorbestimmte Verschiebung ist.

14. Verfahren nach einem der Ansprüche 11 bis 13, dadurch gekennzeichnet, daß in der Entscheidungsphase, um auf das Vorhandensein oder Fehlen des zu erfassenden Signals zu schließen, die für die $n$ Abtastwerte evaluierten Grade augenblicklicher Korrelation $(Corr_j)$ zusammenaddiert werden, die Summe mit einem vorbestimmten Schwellenwert verglichen wird, und in Übereinstimmung mit dem Ergebnis dieses Vergleichs auf das Vorhandensein oder Fehlen eines Signals geschlossen wird.

15. Verfahren nach Anspruch 14, dadurch gekennzeichnet, daß vor dem Vergleich eine Messung des Anteils $\rho$ von das Vorhandensein eines Signals repräsentierenden Abtastwerten über die gesamte Dauer der Abtastung durchgeführt und ein zu berücksichtigender Schwellenwert als eine Funktion des gemessenen Anteils aus einer Vielzahl von Schwellenwerten ausgewählt wird.

16. Verfahren nach einem der Ansprüche 1 bis 15, dadurch gekennzeichnet, daß, um den Zeitursprung festzulegen, das Signal abgetastet und auf das Auftreten einer ersten vorbestimmten Anzahl aufeinanderfolgender Abtastwerte eines das Fehlen der Frequenz repräsentierenden Pegels gewartet wird.

17. Verfahren nach einem der Ansprüche 1 bis 16, dadurch gekennzeichnet, daß die Abtastung des Ausgangssignals der Filtereinrichtung angehalten wird, nachdem eine zweite vorbestimmte Anzahl aufeinanderfolgender Abtastwerte, die das Fehlen der Frequenz repräsentieren, erfaßt worden ist.

18. Verfahren nach Anspruch 17, dadurch gekennzeichnet, daß, sollte die zweite Anzahl aufeinanderfolgender, das Fehlen der Frequenz repräsentierender Abtastwerte nicht erfaßt werden, die Abtastung an dem Ende einer vorbestimmten, ab dem Beginn der Abtastung gemessenen Zeit angehalten wird.

19. Verfahren nach einem der Ansprüche 1 bis 18, dadurch gekennzeichnet, daß das zu erfassende Signal ein über eine Telefonleitung durch Rufen eines Telefaxgeräts gesendetes CNG-Signal ist, und dadurch, daß der Satz von Signalen zumindest teilweise aus einer Vielzahl von durch einen Telefonanrufbeantworter gesendeten Signalen besteht.

20. Anwendung des Verfahrens nach Anspruch 19 auf die Steuerung einer Schalteinrichtung für ein Kommunikationssystem, welches insbesondere Telefon- und Telefaxfunktionen integriert, zwischen einer Telefaxbetriebsart, falls das Vorhandensein eines CNG-Signals erfaßt wird, und einer Telefonkommunikationsbetriebsart im gegenteiligen Fall.

21. Einrichtung zum Erfassen des Vorhandenseins eines periodischen Signals zwischen einem Satz von Signalen, welches Signal eine periodische Wiederholung von zumindest einer Frequenz während zumindest einer vorbestimmten Dauer $(T_{ON})$ aufweist, wobei der Frequenz, der Wiederholungsperiode $T$ und der Dauer $(T_{ON})$ jeweils vorbestimmte Toleranzen $(dT, dT_{ON})$ gegeben sind, umfassend:

- eine Einrichtung (8) zum Unterscheiden der Frequenz von den anderen Frequenzen des Satzes von Signalen, die ausgelegt ist zum Liefern eines Ausgangssignals auf zwei Pegeln, die jeweils das Vorhandensein oder Fehlen der Frequenz in dem Satz von Signalen repräsentieren,
- eine Abtasteinrichtung (16, 24), die ausgelegt ist zum Abtasten des so erhaltenen Pegels, wobei

  die Vorrichtung dadurch gekennzeichnet ist, daß sie ferner umfaßt:

- eine Verarbeitungseinrichtung (16, 22, 23), insbesondere umfassend eine Berechnungs- (16) und Speichereinrichtung (23), ausgelegt zum:

  - Festlegen eines Zeitursprungs und Steuern der Abtasteinrichtung zum Abtasten des von der Unterscheidungseinrichtung ausgegebenen Signals, um $n$ Ausgangssignale zu erhalten,
  - Lokalisieren, auf dem Zeitmaßstab zu Zeitpunkten $t_i$, des Auftretens einer Serie aufeinanderfolgender Abtastwerte desselben Pegels entsprechend dem Vorhandensein der Frequenz, für welche die Verarbeitungseinrichung (16, 22, 23) einen sogenannten "Gewichts"-Wert $P_i$ berechnet, der die Anzahl von Werten des Pegels in der Serie repräsentiert,
  - Ermitteln des Endes einer ersten Maximumperiode $T_{max}$, worin $T_{max} = T + dT$, und, während der letztgenannten, für jede Serie $S_i$, Projizieren in einem ersten zukünftigen Zeitintervall einen Wert $Histo(j)$, der das Gewicht $P_i$ repräsentiert,

- Berechnen, wo zweckmäßig, eines Grads augenblicklicher Korrelation *(Corr$_j$)* zwischen dem für die Serie $S_j$ des Augenblicks $t_j$ berechneten Gewicht und dem Wert *Histo(j)* entsprechend dem sich auf die bei $t_i$ lokalisierte Serie $S_i$ beziehenden Gewicht $P_i$, und

- Schließen auf das Vorhandensein oder Fehlen eines Signals in Übereinstimmung mit den augenblicklichen Korrelationsgraden.

**22.** Einrichtung zum Erfassen des Vorhandenseins eines periodischen Signals zwischen einem Satz von Signalen, welches Signal eine periodische Wiederholung von zumindest einer Frequenz während zumindest einer vorbestimmten Dauer *(T$_{ON}$)* aufweist, wobei der Frequenz, der Wiederholungsperiode $T$ und der Dauer *(T$_{ON}$)* jeweils vorbestimmte Toleranzen *(dT, dT$_{ON}$)* gegeben sind, umfassend:

- eine Einrichtung (8) zum Unterscheiden der Frequenz von den anderen Frequenzen des Satzes von Signalen, die ausgelegt ist zum Liefern eines Ausgangssignals auf zwei Pegeln, die jeweils das Vorhandensein oder Fehlen der Frequenz in dem Satz von Signalen repräsentieren,
- eine Abtasteinrichtung (16, 24), die ausgelegt ist zum Abtasten des so erhaltenen Pegels, wobei

  die Vorrichtung dadurch gekennzeichnet ist, daß sie ferner umfaßt:

- eine Verarbeitungseinrichtung (16, 22, 23), insbesondere umfassend eine Berechnungs- (16) und Speichereinrichtung (23), ausgelegt zum:

  - Festlegen eines Zeitursprungs und Steuern der Abtasteinrichtung zum Abtasten des von der Unterscheidungseinrichtung ausgegebenen Signals, um $n$ Ausgangssignale zu erhalten,
  - Lokalisieren, auf dem Zeitmaßstab zu Zeitpunkten $t_i$, des Auftretens einer Serie aufeinanderfolgender Abtastwerte desselben Pegels entsprechend dem Vorhandensein der Frequenz, für welche die Verarbeitungseinrichung (16, 22, 23) einen sogenannten "Gewichts"-Wert $P_i$ berechnet, der die Anzahl von Werten des Pegels in der Serie repräsentiert,
  - Ermitteln des Endes einer ersten Maximumperiode $T_{max}$, worin $T_{max} = T + dT,$ und, während der letztgenannten, für jede Serie $S_i$, Projizieren, in einem ersten zukünftigen Zeitintervall, einen Wert *Histo(j),* der das Gewicht $P_i$ repräsentiert, und, für jede in einem nach dem Verstreichen der ersten Maximumperiode $T_{max}$, worin $T_{max} = T + dT,$ nach dem Zeitursprung lokalisierten Augenblick $t_j$ lokalisierten Serie $S_j$, Projizieren, in einem zweiten zukünftigen Zeitintervall, eines Werts *Histo(j)* und $P_j,$
  - Berechnen, wo zweckmäßig, eines Grads augenblicklicher Korrelation (*Corr$_j$*) zwischen dem für die Serie $S_j$ des Augenblicks $t_j$ berechneten Gewicht und dem Wert *Histo(j)* entsprechend dem sich auf die bei $t_i$ lokalisierte Serie $S_i$ beziehenden Gewicht $P_i$, und
  - Schließen auf das Vorhandensein oder Fehlen eines Signals in Übereinstimmung mit den augenblicklichen Korrelationsgraden.

**23.** Einrichtung nach Anspruch 22, dadurch gekennzeichnet, daß die Berechnungseinrichtung (16) und die Speichereinrichtung (23) zusätzlich derart ausgelegt sind, daß das zweite zukünftige Intervall zwischen $t_j + T - dT$ und $t_j + T + dT$ liegt, und derart, daß der Wert *Histo(k)* gleich dem Minimum zwischen *Histo(j)* und $P_j$ in jedem Augenblick $t_k$ des zweiten zukünftigen Zeitintervalls ist, für das ein höherer Wert vorangehend nicht allokiert wurde.

**24.** Einrichtung nach einem der Ansprüche 21 bis 23, dadurch gekennzeichnet, daß die Berechnungseinrichtung (16) und die Speichereinrichtung (23) derart ausgelegt sind, daß die $n$ Signalabtastwerte in einer Periode zumindest gleich zwei Maximumperioden $T_{max}$, worin $T_{max} = T + dT,$ erhalten werden, unter Berücksichtigung der der Periode $T$ gegebenen Toleranz *(dT)*.

**25.** Einrichtung nach einem der Ansprüche 21 bis 24, dadurch gekennzeichnet, daß die Berechnungseinrichtung (16) und die Speichereinrichtung (23) derart ausgelegt sind, daß die ersten zukünftigen Zeitintervalle zwischen $t_i + T - DT$ und $t_i + T + DT$ liegen.

**26.** Einrichtung nach einem der Ansprüche 21 bis 25, dadurch gekennzeichnet, daß die Berechnungseinrichtung (16) und die Speichereinrichtung (23) derart ausgelegt sind, daß der Wert *Histo(j)* dadurch erhalten wird, daß ihm der Wert $P_j$ in jedem Augenblick $t_j$ in diesem zukünftigen Intervall allokiert wird, für das ein höherer Wert vorangehend nicht alloziert wurde.

**27.** Einrichtung nach einem der Ansprüche 21 bis 26, dadurch gekennzeichnet, daß die Verarbeitungseinrichtung (16, 22, 23) ausgelegt ist zum Berechnen des Werts des Gewichts als eine direkte Funktion der Anzahl von Abtastwerten der fraglichen Serie.

**28.** Einrichtung nach einem der Ansprüche 21 bis 27, dadurch gekennzeichnet, daß die Verarbeitungseinrichtung (16, 22, 23) ausgelegt ist zum Ermitteln des Gewichts der fraglichen Serie als

- eine direkte Funktion der Anzahl $l$ von Abtastwerten der Serie, falls die Anzahl $l$ einerseits geringer ist als die Anzahl von Abtastwerten $On_{max}$, welche während der um ihre Toleranz $(dT_{ON})$ erhöhten vorbestimmten Dauer $(T_{ON})$ geliefert werden könnten, und andererseits größer ist als die Anzahl von Abtastwerten $ON_{min}$, welche während der vorbestimmten Dauer $(T_{ON})$ minus ihrer Toleranz $(dT_{ON})$ geliefert werden könnten,
- eine vorbestimmte Konstante, falls die Anzahl $l$ größer ist als die Anzahl von Abtastwerten $On_{max}$,
- eine direkte Funktion der Anzahl $l$, falls die letztgenannte geringer ist als die Anzahl von Abtastwerten $ON_{min}$, und falls die Anzahl $s$ von Abtastwerten eines Pegels, der das Vorhandensein eines Signals während der dem gegenwärtigen Augenblick vorangehenden Periode $T_{ON} - dT_{ON}$ repräsentiert, geringer ist als eine vorbestimmte Grenzanzahl,
- eine vorbestimmte Konstante, falls die Anzahl $l$ geringer ist als die Anzahl von Abtastwerten, welche in $T_{min}$ geliefert werden könnten, und falls die Anzahl $s$ von Abtastwerten eines das Vorhandensein eines Signals während der dem gegenwärtigen Augenblick vorangehenden Periode $T_{ON} - dT_{ON}$ repräsentierenden Pegels größer ist als die vorbestimmte Grenzanzahl.

**29.** Einrichtung nach Anspruch 27 oder 28, dadurch gekennzeichnet, daß die Verarbeitungseinrichtung (16, 22, 23), um das Gewicht zu berechnen, die Formel:

$$P = l.(l + 1)/2$$

verwendet.

**30.** Einrichtung nach einem der Ansprüche 21 bis 29, dadurch gekennzeichnet, daß die Verarbeitungseinrichtung (16, 22, 23) zum Lokalisieren jeder Serie $S_i$, $S_j$ in dem ihrem Ende folgenden Augenblick $t_i$ ausgelegt ist.

**31.** Einrichtung nach einem der Ansprüche 26 bis 30, dadurch gekennzeichnet, daß die Verarbeitungseinrichtung zum Evaluieren des Grads augenblicklicher Korrelation mittels der Formel:

$$Corr_j = P_j . Histo(j)$$

ausgelegt ist.

**32.** Einrichtung nach einem der Ansprüche 21 bis 31, dadurch gekennzeichnet, daß die Verarbeitungseinrichtung (16, 22, 23) derart entworfen ist, daß, für jede in dem nach dem Verstreichen der ersten Maximumperiode $T_{max}$ nach dem Zeitursprung erscheinenden Augenblick $t_j$ lokalisierte Serie $S_j$ dann, wenn die Anzahl $l$ von Abtastwerten in der fraglichen Serie $S_j$ größer ist als die Anzahl von Abtastwerten $(ON_{max})$, welche in der vorbestimmten, um ihre Toleranz $(dT_{ON})$ erhöhten Dauer erzeugt wurden, die Verarbeitungseinrichtung (16, 22, 23) den Grad der augenblicklichen Korrelation mittels der Formel

$$Corr_j = P_j . Max\{Histo [j - l+ ON_{max}], ..., Histo[j]\}$$

berechnet.

**33.** Einrichtung nach einem der Ansprüche 26 bis 32, dadurch gekennzeichnet, daß die Verarbeitungseinrichtung (16, 22, 23) derart ausgelegt ist, daß, für jede in dem nach dem Verstreichen der ersten Maximumperiode $T_{max}$ nach dem Zeitursprung erscheinenden Augenblick $t_j$ lokalisierte Serie $S_j$, dann, wenn einerseits die Anzahl $l$ von Abtastwerten in der fraglichen Serie $S_j$ kleiner ist als die Anzahl von Abtastwerten $(ON_{max})$, welche in der um ihre Toleranz $(dT_{ON})$ erhöhten vorbestimmten Dauer $T_{ON}$ erzeugt werden könnten, und dann, wenn andererseits die Anzahl von Abtastwerten $s$ eines Pegels, der das Vorhandensein eines Signals während der gegenwärtigen Augenblick $t_j$ vorangehenden Zeitperiode $(T_{ON} - dT_{ON})$ repräsentiert, größer ist als eine vorbestimmte Grenzanzahl, die Verarbeitungseinrichtung (16, 22, 23) den Grad der augenblicklichen Korrelation mittels der Formel:

$$Corr_j = P_j \cdot Max \{Histo [j - \Delta], ..., Histo[jj]\}$$

berechnet, worin $\Delta$ eine vorbestimmte Verschiebung ist.

34. Einrichtung nach einem der Ansprüche 31 bis 33, dadurch gekennzeichnet, daß die Verarbeitungseinrichtung (16, 22, 23) derart ausgelegt ist, daß um das Vorhandensein oder Fehlen des zu erfassenden Signals abzuleiten, die für die $n$ Abtastwerte berechneten Grade augenblicklicher Korrelation $(Corr_j)$ addiert werden, die Summe mit einem vorbestimmten Schwellenwert verglichen wird, und auf das Vorhandensein oder Fehlen eines Signals in Übereinstimmung mit dem Ergebnis dieses Vergleichs geschlossen wird.

35. Einrichtung nach Anspruch 34, dadurch gekennzeichnet, daß die Verarbeitungseinrichtung (16, 22, 23) derart ausgelegt ist, daß sie vor dem Vergleich über die gesamte Dauer der Abtastung den Anteil $\rho$ von das Vorhandensein eines Signals repräsentierenden Abtastwerten mißt und ein zu berücksichtigender Schwellenwert als eine Funktion des gemessenen Anteils aus einer Vielzahl von Schwellenwerten ausgewählt wird.

36. Einrichtung nach einem der Ansprüche 21 bis 35, dadurch gekennzeichnet, daß die Verarbeitungseinrichtung (16, 22, 23) derart ausgelegt ist, daß, um den Zeitursprung festzulegen, sie das Signal abtastet und auf das Auftreten einer ersten vorbestimmten Anzahl aufeinanderfolgender Abtastwerte eines das Fehlen der Frequenz repräsentierenden Pegels wartet.

37. Einrichtung nach einem der Ansprüche 21 bis 36, dadurch gekennzeichnet, daß die Verarbeitungseinrichtung (16, 22, 23) ausgelegt ist zum Steuern des Herunterfahrens der Einrichtung zum Abtasten des Ausgangssignals der Filtereinrichtung, nachdem eine zweite vorbestimmte Anzahl das Fehlen der Frequenz repräsentierender Abtastwerte erfaßt wurde.

38. Einrichtung nach Anspruch 37, dadurch gekennzeichnet, daß die Verarbeitungseinrichtung (16, 22, 23) auch dazu ausgelegt ist, daß, sollte sie die zweite Anzahl aufeinanderfolgender, das Fehlen der Frequenz repräsentierender Abtastwerte nicht erfassen, sie die Abtastung an dem Ende einer vorbestimmten, ab dem Beginn der Abtastung gemessenen Zeit beendet.

39. Einrichtung nach einem der Ansprüche 21 bis 38, dadurch gekennzeichnet, daß die Unterscheidungseinrichtung (8) zum Unterscheiden der Frequenzen zwischen 1062 und 1138 Hz ausgelegt ist.

40. Telekommunikationsinstallation, integrierend eine Einrichtung (8, 16, 22-24) in Übereinstimmung mit einem der Ansprüche 21 bis 39.

41. Telefaxgerät, integrierend eine Einrichtung (8, 16, 22-24) in Übereinstimmung mit einem der Ansprüche 21 bis 39.

42. Telefaxgerät nach Anspruch 41, dadurch gekennzeichnet, daß es auch eine Telefonanrufbeantwortereinrichtung (90) integriert.

43. Telefaxgerät nach einem der Ansprüche 41 und 42, dadurch gekennzeichnet, daß es auch eine Einrichtung integriert zum Erfassen, ob der Empfänger angehoben wurde (4).

44. Telefaxgerät nach einem der Ansprüche 41 bis 43, dadurch gekennzeichnet, daß es auch einen elektronischen Schalter (CML 3) integriert, bei dem

- ein Eingang (30) direkt mit einer Leitungsschnittstelle (20) des Telefaxgeräts verbunden ist,
- ein Ausgang (31) mit einem Eingang (21) verbunden ist, der zu einem externen Anrufbeantwortergerät (2) und/oder einer Telefon-Handeinrichtung (35) verbindet,
- ein Ausgang (32) mit einem Eingang (61) einer Netzwerküberwachungseinheit (6) verbunden ist, und
- ein Steuereingang (33) mit der Verarbeitungseinrichtung (16) verbunden ist.

45. Telefaxgerät nach Anspruch 44, dadurch gekennzeichnet, daß es auch einen zweiten elektronischen Schalter (7) integriert, bei dem

- ein Steuereingang (73) mit der Verarbeitungseinrichtung (16) verbunden ist,
- ein analoger Ausgang (70) mit dem Eingang (80) einer Unterscheidungseinrichtung (8) verbunden ist,
- ein Eingang (72) mit dem analogen Ausgang/Eingang (91) des eingebauten Anrufbeantwortergeräts (90) verbunden ist, und
- ein Eingang (71) mit einem zu einem externen Anrufbeantwortergerät (2) verbindenden Eingang (21) und/ oder einer Telefon-Handeinrichtung (35) verbunden ist.

**Revendications**

1. Procédé pour détecter la présence d'un signal périodique parmi un ensemble de signaux, ledit signal ayant une répétition périodique d'au moins une fréquence pendant au moins une durée prédéterminée ($T_{ON}$), ladite fréquence, la période T de la répétition périodique et ladite durée ($T_{ON}$) étant affectées de tolérances respectives prédéterminées (dT, $dT_{ON}$), comprenant une étape au cours de laquelle :

    a) dans une phase dite de "discrimination", on discrimine ladite fréquence par rapport aux autres fréquences de l'ensemble de signaux avec des moyens de filtrage, et on fournit un signal de sortie à deux niveaux représentant respectivement la présence ou l'absence de ladite fréquence dans l'ensemble de signaux,
    b) dans une phase dite "d'échantillonnage", on fixe une origine des temps et à partir de cette dernière on échantillonne le niveau ainsi obtenu en n échantillons de signal,

    le procédé étant caractérisé en ce qu'en outre:

    c) dans une phase dite de "détection et pondération", on repère sur l'échelle des temps à des instants $t_i$, l'apparition d'une série d'échantillons successifs $S_i$ du même niveau correspondant à la présence de ladite fréquence, pour laquelle on calcule une valeur $P_i$, dite "poids", représentant le nombre d'échantillons de ce niveau de ladite série,
    d) dans une phase dite de "création d'un historique", pour chaque série $S_i$, on projette dans un premier intervalle de temps futur une valeur Histo(j) représentant le poids $P_i$,
    e) dans une phase dite de "corrélation", le cas échéant, on calcule un degré de corrélation instantanée ($Corr_j$) entre le poids $P_j$, calculé pour la série $S_j$ de l'instant $t_j$, et la valeur Histo(j), correspondant au poids $P_i$ relatif à la série $S_i$ repérée en $t_i$,
    f) dans une phase dite de "décision", on déduit la présence ou l'absence du signal conformément aux degrés de corrélation instantanée.

2. Procédé pour détecter la présence d'un signal périodique parmi un ensemble de signaux, ledit signal ayant une répétition périodique d'au moins une fréquence pendant au moins une durée prédéterminée ($T_{ON}$), ladite fréquence, la période de répétition T et ladite durée ($T_{ON}$) étant affectées de tolérances prédéterminées respectives (dT, $dT_{ON}$), comprenant une étape au cours de laquelle :

    a) dans une phase dite de "discrimination", on discrimine ladite fréquence par rapport aux autres fréquences de l'ensemble de signaux, avec des moyens de filtrage, et on fournit un signal de sortie à deux niveaux représentant respectivement la présence ou l'absence de ladite fréquence dans l'ensemble de signaux,
    b) dans une phase dite "d'échantillonnage", on fixe une origine des temps et à partir de celle-ci on échantillonne le niveau ainsi obtenu en n échantillons de signal,

    ce procédé étant caractérisé en ce qu'en outre:

    c) dans une phase dite de "détection et pondération", on repère sur l'échelle des temps à des instants $t_i$, l'apparition d'une série d'échantillons successifs $S_i$ du même niveau correspondant à la présence de ladite fréquence, pour laquelle on calcule une valeur $P_i$ dite "poids" représentant le nombre d'échantillons de ce niveau dans ladite série,
    d) dans une phase dite de "création d'un historique", pendant la première période maximale $T_{max}$, avec $T_{max}$ = T + dT, pour chaque série $S_i$, on projette dans un premier intervalle de temps futur une valeur Histo(j) représentant le poids $P_i$, et pour chaque série $S_j$ repérée à l'instant $t_j$ apparaissant après l'écoulement de la première période maximale $T_{max}$, avec $T_{max}$ = T + dT, à partir de l'origine des temps, on projette dans un second intervalle de temps futur une valeur Histo(k) représentant Histo(j) et $P_j$,

e) dans une phase dite de "corrélation", le cas échéant, on calcule un degré de corrélation instantanée ($Corr_j$) entre le poids $P_j$, calculé pour la série $S_j$ de l'instant $t_j$, et la valeur Histo(j), correspondant au poids $P_i$ relatif à la série $S_i$,

f) dans une phase dite de "décision", on déduit la présence ou l'absence du signal conformément aux degrés de corrélation instantanée.

3. Procédé selon la revendication 2, caractérisé en ce que le second intervalle futur est compris entre $t_j + T - dT$ et $t_j + T + dT$ et en ce que la valeur Histo(k) est égale au minimum entre la valeur Histo(j) et $P_j$ à chaque instant $t_k$ dans le second intervalle futur auquel une valeur supérieure n'a pas été affectée précédemment.

4. Procédé selon l'une quelconque des revendications 1 à 3, caractérisé en ce que les n échantillons de signal obtenus pendant la phase d'échantillonnage s'étendent sur une durée égale à au moins deux périodes maximales $T_{max}$, avec $T_{max} = T + dT$, tenant compte de la tolérance dT s'appliquant à la période T.

5. Procédé selon l'une quelconque des revendications 1 à 4, caractérisé en ce que les premiers intervalles de temps futurs sont compris entre $t_i + T - dT$ et $t_i + T + dT$.

6. Procédé selon l'une quelconque des revendications 1 à 5, caractérisé en ce que la valeur Histo(j) est affectée, en lui donnant la valeur $P_i$, à chaque instant $t_j$ de l'intervalle de temps futur auquel une valeur supérieure n'a pas été affectée précédemment.

7. Procédé selon l'une quelconque des revendications 1 à 6, caractérisé en ce que la valeur de poids de la série considérée est une fonction directe du nombre l d'échantillons dans la série considérée.

8. Procédé selon l'une quelconque des revendications 1 à 7, caractérisé en ce que la valeur de poids de la série considérée est :

   - une fonction directe du nombre l d'échantillons dans ladite série si ce nombre l est, d'une part, inférieur au nombre d'échantillons $ON_{max}$ qui pourraient être fournis pendant la durée prédéterminée ($T_{ON}$) augmentée de sa tolérance ($dT_{ON}$) et, d'autre part, supérieur au nombre d'échantillons $ON_{min}$ qui pourraient être fournis pendant la durée prédéterminée ($T_{ON}$) diminuée de sa tolérance ($dT_{ON}$),
   - une constante prédéterminée si le nombre l est supérieur au nombre d'échantillons $ON_{max}$,
   - une fonction directe du nombre l si ce dernier est inférieur au nombre d'échantillons $ON_{min}$ et si le nombre s d'échantillons d'un niveau représentant la présence d'un signal pendant la période $T_{ON} - dT_{ON}$ qui précède l'instant courant est inférieur à un nombre limite prédéterminé,
   - une constante prédéterminée si le nombre l est inférieur au nombre d'échantillons qui pourraient être fournis pendant $T_{min}$ et si le nombre s d'échantillons d'un niveau représentant la présence d'un signal pendant la période $T_{ON}$
   - $dT_{ON}$ qui précède l'instant courant est supérieur au nombre limite prédéterminé.

9. Procédé selon l'une quelconque des revendications 7 et 8, caractérisé en ce que ladite fonction directe permettant de calculer le poids est :

$$P = l \cdot (l + 1)/2$$

10. Procédé selon l'une quelconque des revendications 1 à 9, caractérisé en ce que chaque série $S_i$, $S_j$ est repérée à l'instant $t_i$ ou $t_j$ qui suit sa fin.

11. Procédé selon l'une quelconque des revendications 1 à 10, caractérisé en ce que le degré de corrélation instantané est évalué au moyen de la formule :

$$Corr_j = P_j \cdot Histo(j)$$

12. Procédé selon l'une quelconque des revendications 2 à 11, caractérisé en ce que, pour chaque série $S_j$ repérée à l'instant $t_j$ arrivant après l'écoulement de la première période maximale $T_{max}$ à partir de l'origine des temps, si

le nombre $\Sigma$ d'échantillons dans la série $S_j$ considérée est supérieur au nombre d'échantillons ($ON_{max}$) qui pourraient être produits dans la durée prédéterminée $T_{ON}$ augmentée de sa tolérance ($dT_{ON}$), le degré de corrélation instantané est calculé au moyen de la formule :

$$Corr_j = P_j.\text{Max } \{Histo [j - l + ON_{max}], ..., Histo[j]\}$$

13. Procédé selon l'une quelconque des revendications 2 à 12, caractérisé en ce que, pour chaque série $S_j$ repérée à l'instant $t_j$ arrivant après l'écoulement de la première période maximale $T_{max}$ à partir de l'origine des temps, si, d'une part, le nombre l d'échantillons dans la série $S_j$ considérée est inférieur au nombre d'échantillons ($ON_{max}$) qui pourraient être produits dans la durée prédéterminée $T_{ON}$ augmentée de sa tolérance ($dT_{ON}$) et si, d'autre part, le nombre d'échantillons s d'un niveau représentant la présence d'un signal pendant la période de durée ($T_{ON}$ - $dT_{ON}$) qui précède l'instant courant $t_j$ est supérieur à un nombre de seuil prédéterminé, le degré de corrélation instantané est calculé au moyen de la formule :

$$Corr_j = P_j \cdot \text{Max } \{Histo [j - \Delta], ..., Histo[j]\}$$

dans laquelle $\Delta$ est un décalage prédéterminé.

14. Procédé selon l'une quelconque des revendications 11 à 13, caractérisé en ce que, dans la phase de décision, pour déduire la présence ou l'absence du signal à détecter, on additionne ensemble les degrés de corrélation instantanés ($Corr_j$) évalués pour les n échantillons, on compare le total à une valeur de seuil prédéterminée, et on déduit la présence ou l'absence d'un signal conformément au résultat de cette comparaison.

15. Procédé selon la revendication 14, caractérisé en ce que, avant ladite comparaison, on mesure sur la totalité de la durée de l'échantillonnage la proportion $\rho$ d'échantillons représentant la présence d'un signal, et on sélectionne une valeur de seuil à prendre en considération, parmi une pluralité de valeurs de seuil, en fonction de la proportion mesurée.

16. Procédé selon l'une quelconque des revendications 1 à 15, caractérisé en ce que, pour fixer l'origine des temps, on échantillonne le signal et on attend l'apparition d'un premier nombre prédéterminé d'échantillons successifs d'un niveau représentant l'absence de ladite fréquence.

17. Procédé selon l'une quelconque des revendications 1 à 16, caractérisé en ce qu'on arrête l'échantillonnage du signal de sortie des moyens de filtrage après avoir détecté un second nombre prédéterminé d'échantillons successifs représentant l'absence de ladite fréquence.

18. Procédé selon la revendication 17, caractérisé en ce que dans le cas où le second nombre d'échantillons successifs représentant l'absence de ladite fréquence n'est pas détecté, l'échantillonnage est arrêté à la fin d'une durée prédéterminée mesurée à partir du début de l'échantillonnage.

19. Procédé selon l'une quelconque des revendications 1 à 18, caractérisé en ce que le signal à détecter est un signal CNG émis sur une ligne téléphonique par un télécopieur appelant, et en ce que l'ensemble de signaux consiste, au moins en partie, en une pluralité de signaux émis par un répondeur téléphonique.

20. Application du procédé selon la revendication 19 à la commande de moyens de commutation pour un système de communication, incorporant en particulier des fonctions de téléphone et de télécopie, entre un mode de télécopie si la présence d'un signal CNG est détecté et un mode de communication téléphonique dans le cas contraire.

21. Dispositif pour détecter la présence d'un signal périodique parmi un ensemble de signaux, ce signal ayant une répétition périodique d'au moins une fréquence pendant au moins une durée prédéterminée ($T_{ON}$), ladite fréquence, la période de répétition T et ladite durée ($T_{ON}$) étant affectées de tolérances respectives prédéterminées ($dT$, $dT_{ON}$), ce dispositif comprenant :

- des moyens (8) pour discriminer ladite fréquence par rapport aux autres fréquences de l'ensemble de signaux, adaptés pour fournir un signal de sortie à deux niveaux représentant respectivement la présence ou l'absence de ladite fréquence dans l'ensemble de signaux,

- des moyens d'échantillonnage (16, 24) adaptés pour échantillonner le niveau ainsi obtenu,

ce dispositif étant caractérisé en ce qu'il comprend également :

- des moyens de traitement (16, 22, 23) comprenant en particulier des moyens de calcul (16) et de mémorisation (23), adaptés pour :

  . fixer une origine des temps et commander les moyens d'échantillonnage de façon à échantillonner le signal émis par les moyens de discrimination, de façon à obtenir n signaux de sortie,

  . repérer sur l'échelle des temps à des instants $t_i$ l'apparition d'une série d'échantillons successifs $S_i$ du même niveau correspondant à la présence de ladite fréquence, pour laquelle les moyens de traitement (16, 22, 23) calculent une valeur $P_i$ dite de "poids" représentant le nombre de valeurs de ce niveau dans ladite série,

  . déterminer la fin d'une première période maximale $T_{max}$, avec $T_{max} = T + dT$, et, pendant cette dernière, pour chaque série $S_i$, projeter dans un premier intervalle de temps futur une valeur Histo(j) représentative du poids $P_i$,

  . calculer, le cas échéant, un degré de corrélation instantanée (Corr$_j$) entre le poids $P_j$ calculé pour la série $S_j$ de l'instant $t_j$, et la valeur Histo(j) correspondant au poids $P_i$ relatif à la série $S_i$ repérée en $t_i$, et

  . déduire la présence ou l'absence d'un signal conformément aux degrés de corrélation instantanés.

22. Dispositif pour détecter la présence d'un signal périodique parmi un ensemble de signaux, ce signal ayant une répétition périodique d'au moins une fréquence pendant au moins une durée prédéterminée ($T_{ON}$), ladite fréquence, la période de répétition T et ladite durée ($T_{ON}$) étant affectées de tolérances respectives prédéterminées (dT, $dT_{ON}$), ce dispositif comprenant :

- des moyens (8) pour discriminer ladite fréquence par rapport aux autres fréquences de l'ensemble de signaux, adaptés pour fournir un signal de sortie à deux niveaux représentant respectivement la présence ou l'absence de ladite fréquence dans l'ensemble de signaux,
- des moyens d'échantillonnage (16, 24) adaptés pour échantillonner le niveau ainsi obtenu,

ce dispositif étant caractérisé en ce qu'il comprend également :

- des moyens de traitement (16, 22, 23) comprenant en particulier des moyens de calcul (16) et de mémorisation (23), adaptés pour :

  . fixer une origine des temps et commander les moyens d'échantillonnage de façon à échantillonner le signal émis par les moyens de discrimination de façon à obtenir n échantillons de sortie,

  . repérer sur l'échelle des temps à des instants $t_i$ l'apparition d'une série d'échantillons successifs $S_i$ du même niveau correspondant à la présence de ladite fréquence, pour laquelle les moyens de traitement (16, 22, 23) calculent une valeur $P_i$ dite "poids", représentant le nombre de valeurs de ce niveau dans ladite série,

  . déterminer la fin d'une première période maximale $T_{max}$, avec $T_{max} = T + dT$, et, pendant cette dernière, pour chaque série $S_i$, projeter dans un premier intervalle de temps futur une valeur Histo(j) représentative du poids $P_i$, et pour chaque série $S_j$ repérée à un instant $t_j$ apparaissant après l'écoulement de la première période maximale $T_{max}$, avec $T_{max} = T + dT$, à partir de l'origine des temps, projeter dans un second intervalle de temps futur une valeur Histo(k) représentative de Histo(j) et $P_j$,

  . calculer, le cas échéant, un degré de corrélation instantanée (Corr$_j$) entre le poids $P_j$ calculé pour la série $S_j$ de l'instant $t_j$, et la valeur Histo(j) correspondant au poids $P_i$ relatif à la série $S_i$ repérée en $T_i$, et

  . déduire la présence ou l'absence d'un signal conformément aux degrés de corrélation instantanée.

23. Dispositif selon la revendication 22, caractérisé en ce que les moyens de calcul (16) et les moyens de mémorisation (23) sont en outre adaptés de façon que le second intervalle de temps futur soit compris entre $t_j + T - dT$ et $t_j + T + dT$, et de façon que la valeur Histo(k) soit égale au minimum entre Histo(j) et $P_j$ à chaque instant $t_k$ du second intervalle de temps futur auquel une valeur supérieure n'a pas été affectée précédemment.

24. Dispositif selon l'une quelconque des revendications 21 à 23, caractérisé en ce que les moyens de calcul (16) et les moyens de mémorisation (23) sont conçus de façon que les n échantillons de signal soient obtenus dans une période au moins égale à deux périodes maximales $T_{max}$, avec $T_{max} = T + dT$, tenant compte de la tolérance (dT) affectée à la période T.

**25.** Dispositif selon l'une quelconque des revendications 21 à 24, caractérisé en ce que les moyens de calcul (16) et les moyens de mémorisation (23) sont conçus de façon que les premiers intervalles de temps futurs soient compris entre $t_i + T - dT$ et $t_i + T + dT$.

**26.** Dispositif selon l'une quelconque des revendications 21 à 25, caractérisé en ce que les moyens de calcul (16) et les moyens de mémorisation (23) sont conçus de façon que la valeur Histo(j) soit obtenue en lui affectant la valeur $P_i$ à chaque instant $t_j$ dans cet intervalle futur auquel une valeur supérieure n'a pas été affectée précédemment.

**27.** Dispositif selon l'une quelconque des revendications 21 à 26, caractérisé en ce que les moyens de traitement (16, 22, 23) sont adaptés pour calculer la valeur du poids comme étant une fonction directe du nombre d'échantillons de la série considérée.

**28.** Dispositif selon l'une quelconque des revendications 21 à 27, caractérisé en ce que les moyens de traitement (16, 22, 23) sont adaptés pour déterminer le poids de la série considérée comme étant :

- une fonction directe du nombre l d'échantillons de ladite série si ce nombre l est, d'une part, inférieur au nombre d'échantillons $ON_{max}$ qui pourraient être fournis pendant la durée prédéterminée ($T_{ON}$) augmentée de sa tolérance ($dT_{ON}$) et, d'autre part, supérieur au nombre d'échantillons $ON_{min}$ qui pourraient être fournis pendant la durée prédéterminée ($T_{ON}$) diminuée de sa tolérance ($dT_{ON}$),
- une constante prédéterminée si le nombre l est supérieur au nombre d'échantillons $ON_{max}$,
- une fonction directe du nombre l si ce dernier est inférieur au nombre d'échantillons $ON_{min}$ et si le nombre s d'échantillons d'un niveau représentant la présence d'un signal pendant la période $T_{ON} - dT_{ON}$ qui précède l'instant courant est inférieur à un nombre limite prédéterminé,
- une constante prédéterminée si le nombre l est inférieur au nombre d'échantillons qui pourraient être fournis pendant $T_{min}$ et si le nombre s d'échantillons d'un niveau représentant la présence d'un signal pendant la période $T_{ON}$
- $dT_{ON}$ qui précède l'instant courant est supérieur au nombre limite prédéterminé.

**29.** Dispositif selon la revendication 27 ou 28, caractérisé en ce que les moyens de traitement (16, 22, 23) utilisent, pour calculer le poids, la formule :

$$P = l \cdot (l + 1)/2$$

**30.** Dispositif selon l'une quelconque des revendications 21 à 29, caractérisé en ce que les moyens de traitement (16, 22, 23) sont adaptés pour repérer chaque série $S_i$, $S_j$ à l'instant $t_i$ qui suit sa fin.

**31.** Dispositif selon l'une quelconque des revendications 26 à 30, caractérisé en ce que les moyens de traitement (16, 22, 23) sont adaptés pour évaluer le degré de corrélation instantanée au moyen de la formule :

$$Corr_j = P_j \cdot Histo(j)$$

**32.** Dispositif selon l'une quelconque des revendications 21 à 31, caractérisé en ce que les moyens de traitement (16, 22, 23) sont conçus de façon que, pour chaque série $S_j$ repérée à l'instant $t_j$ arrivant après l'expiration de la première période maximale $T_{max}$ à partir de l'origine des temps, si le nombre l d'échantillons dans la série $S_j$ considérée est supérieur au nombre d'échantillons ($ON_{max}$) qui pourraient être produits pendant la durée prédéterminée $T_{ON}$ augmentée de sa tolérance ($dT_{ON}$), les moyens de traitement (16, 22, 23) calculent le degré de corrélation instantanée au moyen de la formule :

$$Corr_j = P_j \cdot Max \{Histo [j - l + ON_{max}], ..., Histo[j]\}$$

**33.** Dispositif selon l'une quelconque des revendications 26 à 32, caractérisé en ce que les moyens de traitement (16, 22, 23) sont conçus de façon que, pour chaque série $S_j$ repérée à l'instant $t_j$ arrivant après l'écoulement de la première période maximale $T_{max}$ à partir de l'origine des temps, si, d'une part, le nombre l d'échantillons dans la

série $S_j$ considérée est inférieur au nombre d'échantillons ($ON_{max}$) qui pourraient être produits pendant la durée prédéterminée $T_{ON}$ augmentée de sa tolérance ($dT_{ON}$) et si, d'autre part, le nombre d'échantillons s d'un niveau représentant la présence d'un signal pendant la période de durée ($T_{ON}$ - $dT_{ON}$) qui précède l'instant courant tj est supérieur à un nombre limite prédéterminé, les moyens de traitement (16, 22, 23) calculent le degré de corrélation instantané au moyen de la formule :

$$Corr_j = P_j \cdot Max \{Histo [j - \Delta], ..., Histo[j]\}$$

dans laquelle $\Delta$ est un décalage prédéterminé.

34. Dispositif selon l'une quelconque des revendications 31 à 33, caractérisé en ce que les moyens de traitement (16, 22, 23) sont conçus de façon que, dans le but de déduire la présence ou l'absence du signal à détecter, les degrés de corrélation instantanée ($Corr_j$) calculés pour les n échantillons sont additionnés ensemble, le total est comparé avec une valeur de seuil prédéterminée et la présence ou l'absence d'un signal est déduite conformément au résultat de cette comparaison.

35. Dispositif selon la revendication 34, caractérisé en ce que les moyens de traitement (16, 22, 23) sont conçus de façon à mesurer, avant la comparaison, et sur la totalité de la durée de l'échantillonnage, la proportion $\rho$ d'échantillons représentant la présence d'un signal, et une valeur de seuil à prendre en considération est sélectionnée parmi une pluralité de valeurs de seuil en fonction de la proportion mesurée.

36. Dispositif selon l'une quelconque des revendications 21 à 35, caractérisé en ce que les moyens de traitement (16, 22, 23) sont conçus, dans le but de fixer l'origine des temps, de façon à échantillonner le signal et à attendre l'apparition d'un premier nombre prédéterminé d'échantillons successifs d'un niveau représentant l'absence de ladite fréquence.

37. Dispositif selon l'une quelconque des revendications 21 à 36, caractérisé en ce que les moyens de traitement (16, 22, 23) sont adaptés pour commander la mise hors fonction des moyens pour l'échantillonnage du signal de sortie des moyens de filtrage après la détection d'un second nombre prédéterminé d'échantillons successifs représentant l'absence de ladite fréquence.

38. Dispositif selon la revendication 37, caractérisé en ce que les moyens de traitement (16, 22, 23) sont également conçus de façon à arrêter l'échantillonnage à la fin d'une durée prédéterminée mesurée à partir du début de l'échantillonnage, dans le cas où ils ne détecteraient pas le second nombre d'échantillons successifs représentant l'absence de ladite fréquence.

39. Dispositif selon l'une quelconque des revendications 21 à 38, caractérisé en ce que les moyens de discrimination (8) sont adaptés pour discriminer les fréquences comprises entre 1062 et 1138 Hz.

40. Installation de télécommunication comprenant un dispositif (8, 16, 22-24) selon l'une quelconque des revendications 21 à 39.

41. Télécopieur incorporant un dispositif (8, 16, 22-24) selon l'une quelconque des revendications 21 à 39.

42. Télécopieur selon la revendication 41, caractérisé en ce qu'il incorpore également un répondeur téléphonique (90).

43. Télécopieur selon l'une quelconque des revendications 41 et 42, caractérisé en ce qu'il incorpore également un dispositif pour détecter le moment auquel le combiné a été décroché (4).

44. Télécopieur selon l'une quelconque des revendications 41 à 43, caractérisé en ce qu'il incorpore également un commutateur électronique (CML 3) dont :

- une entrée (30) est directement connectée à une interface de ligne (20) du télécopieur,
- une sortie (31) est connectée à une entrée (21) reliée à un répondeur externe (2) et/ou un poste téléphonique (35),
- une sortie (32) est connectée à une entrée (61) d'une unité de contrôle de réseau (6), et
- une entrée de commande (33) est connectée aux moyens de traitement (16).

**45.** Télécopieur selon la revendication 44, caractérisé en ce qu'il incorpore également un second commutateur électronique (7) dont :

- une entrée de commande (73) est connectée aux moyens de traitement (16),
- une sortie analogique (70) est connectée à l'entrée (80) des moyens de discrimination (8),
- une entrée (72) est connectée à l'entrée-sortie analogique (91) du répondeur intégré (90), et
- une entrée (71) est connectée à une entrée (21) connectée à un répondeur externe (2) et/ou un poste téléphonique (35).

Prior Art

Fig. 1

Fig. 2

Start of sampling

End of sampling

0.25s   3s   0.5s   3s   0.5s   1s

Fig. 3a

$\ell = 50 : P_l = 1275$

$S_{351}$

0   100   200   300   351   648   754   $i, j$

Time origin after
2 samples

$P_{351} = 1275$

1275   1275

Fig. 3b

$\ell = 50 : P_j = 1275$

$S_{701}$

0   100   200   300   351   400   500   600   648   701   754   805   $i, j$

Histo   1275   1275

Fig. 3c

Start of sampling

End of sampling

$S_{61}$  $S_{101}$  $S_{201}$  $S_{251}$  $S_{326}$  $S_{401}$  $S_{451}$  $S_{551}$  $S_{576}$  $S_{651}$  $S_{751}$

2    25    50    2    25    2    2    50    2    25    25

1

0

51    101    201    251    326    401    451    551    576    651    751    805

$i, j$

Fig. 4

EP 0 749 230 B1

Fig. 5a

$S_{51}, \ell = 2 \Rightarrow P_{51} = 3$

Fig. 5b

$S_{101}, \ell = 25 \Rightarrow P_{101} = 325$

Fig. 5c

$S_{201}, \ell = 50 \Rightarrow P_{201} = 1275$

Fig. 5d

$S_{251}, \ell = 2 \Rightarrow P_{251} = 3$

Fig. 5e

$S_{326}, \ell = 25 \Rightarrow P_{326} = 325$

Fig. 5f

$S_{401}, \ell = 2 \Rightarrow P_{401} = 3$

46

$S_{451},\ \ell = 2 \Rightarrow P_{451} = 3$

$Corr_{451} = 3 \times Histo\ (451)$

$\Sigma\ Corr_j = 975$

Fig. 5g

$S_{551},\ \ell = 50 \Rightarrow P_{551} = 1275$

$Corr_{551} = 1275 \times Histo\ (551)$

$\Sigma\ Corr_j = 1\ 626\ 000$

Fig. 5h

$S_{576},\ \ell = 2 \Rightarrow P_{576} = 3$

$Corr_{576} = 3 \times Histo\ (576)$

$\Sigma\ Corr_j = 1\ 630\ 425$

Fig. 5i

$S_{651},\ \ell = 25 \Rightarrow P_{651} = 325$

$Corr_{651} = 325 \times Histo\ (651)$

$\Sigma\ Corr_j = 1\ 736\ 050$

Fig. 5j

$S_{751},\ \ell = 25 \Rightarrow P_{751} = 325$

$Corr_{751} = 325 \times Histo\ (751)$

$\Sigma\ Corr_j = 1\ 737\ 025$

Fig. 5k

Fig. 6

$\ell=3 : P_{101} = 6$   $\ell=50 : P_{451} = 1275$

$S_{101}$   $S_{451}$

$i, j$

101   398   451 504   748   854

6   6   6

$P_{101} = 6$

6   6

Fig. 7

$S_{76}$   $\ell=25 : P_{76} = 325$

$S_{101}$   $\ell=24 : P_{101} = 300$

$i, j$

76 101   398   504

1275   1275

$s = 41$

Fig. 8

$\ell=50 : P_{101} = 1275$   $\ell=62 : P_{507} = 1711$

$S_{101}$   $S_{507}$

$i, j$

101   398   504 507

1275   1275   0

$P_{101} = 1275$

$Corr_{507} = P_{507} \times \text{Max} \{\text{Histo} [503], ..., \text{Histo} [507]\}$
$= 1711 \times 1275$
$= 2.181.525$

Fig. 9

$\ell=50 : P_{101} = 1275$

$S_{101}$   $S_{507}$   $\ell= 20 \ s = 40 : P_{507} = 1275$

$i, j$

101   398   504 507

1275   1275   0

$P_{101} = 1275$

$Corr_{507} = P_{507} \times \text{Max} \{\text{Histo} [487], ..., \text{Histo} [507]\}$
$= 1275 \times 1275$
$= 1.625.625$

Fig. 10a

Fig. 10b

Fig. 11a

Stand-by state — 400

NO

FIRST CALL SIGNAL DETECTED? — 401

YES

Start of counting of call signals — 402

NO

SECOND CALL SIGNAL DETECTED? — 403

YES

Switch CML 3 and analogue switch 7 — 404

Command of built-in answering machine for UGM output — 405

CNG detected? — 406

NO

YES

Built-in answering machine procedure controlled by microprocessor 16 — 407

Fax procedure — 408

Drop line = switch CML 3 — 409

Switch analogue switch 7 — 410

Fig. 11b

52

Fig. 12a

From
304 Fig. 11a
or
405 Fig. 11b

Start counter
8500 ms — 100

Counter expired — 101 → YES

NO

$i = 0$
$X = 2$ — 102

$A[i] =$ Sample — 103

$A[i] = 0$ ? — 104

NO

YES

$i = i + 1;$
$X = X - 1;$ — 105

$X = 0$ ? — 106

NO

YES

Corr = 0
Histo [J] = 0
$s = 0$
$\ell = 0$
$\rho = 0$ — 107

Counter expired — 108 → YES

NO

$i < n$
or
$A[i-1] = 1$ ? — 109 → NO

YES

$A[i] =$ Sample — 110

$s = s + A[i]$
$\rho = \rho + A[i]$ — 111

$i \geq ON_{min}$ ? — 112

YES

$s = s - A[i - ON_{min}]$ — 113

NO

To 114
Fig. 12b

$\rho = \rho / i$ — 135

Threshold (ρ)
equals TabThreshold — 136

Corr > Seuil ? — 137

NO                    YES

To 306 Fig. 11a
or
407 Fig. 11b — 138

To 307 Fig. 11a
or
408 Fig. 11b

139

53

EP 0 749 230 B1

From 112,113
Fig. 12a

$A[i] = 0$ — 114 — NO

YES — 115 — $l = l + 1$

$A[i-1] = 0$ — 116 — YES

NO

$s >= ON_{MIN} - 2$ — 117 — NO / YES

$W = 1/2 \times l \times (l + 1)$ — 118

$l >= ON_{MIN}$ — 119 — NO / YES

$l >= ON_{MAX}$ — 120 — YES / NO

$W = 1/2 \, ON_{MAX} \, (ON_{MAX} + 1)$ — 121

$W = 1/2 \, l \, (l + 1)$ — 122

$W = 1/2 \, ON \, (ON + 1)$ — 123

$i >= Z_{max}$ — 124 — YES / NO

CreateHisto $(i, W)$ — 125

$l >= ON_{MAX}$ — 126 — NO / YES

$s >= ON_{MIN} - 2$ — 127 — NO / YES

$H = Histo[i]$ — 128

$H = Max(Histo[i - \Delta, ..., i])$ — 129

$H = Max(Histo[i - l + ON_{MAX}, ..., i])$ — 130

Create Histo $(i, Min(W, H))$ — 131

$Corr = Corr + H \times W$ — 132

$l = 0$ — 133

$i = i + 1$ — 134

To 108
Fig. 12a

Fig. 12b

54

From
125 or131
Fig. 12b

$j = i + Z_{min}$ —200

$j < i + Z_{max}$ —201

NO →

To
132 or 133 Fig. 12b

YES

$Histo\ (j) = Max\ [Histo\ (j),\quad W\quad ]s$ —202

$j = j + 1$ —203

Fig. 12c

ROM

| | |
|---|---|
| Tabthreshold(0,...,0.2) | 30 000 |
| Tabthreshold(0.2,...,0.3) | 1 000 000 |
| Tabthreshold(0.3,...,0.75) | 1 500 000 |
| Tabthreshold(0.75,...,1) | 3 000 000 |
| $T$ | |
| $T_{min}$ | |
| $T_{max}$ | |
| $dT$ | |
| $T_{ON}$ | |
| $T_{OFF}$ | |
| $ON_{min}$ | |
| $ON_{max}$ | |
| $dT_{ON}$ | |
| $dT_{OFF}$ | |
| $Z_{min}$ | |
| $Z_{max}$ | |
| $n$ | |
| MainRout | |
| HistoRout | |
| MainProgrA | |
| MainProgrB | |
| $R$ | |

~22

Fig. 13a

RAM

| |
|---|
| $i$ |
| $j$ |
| $X$ |
| $A(0)$ |
| ... |
| $A(849)$ |
| $Corr$ |
| $Histo(0)$ |
| ... |
| $Histo(1252)$ |
| $\ell$ |
| $\rho$ |
| $s$ |
| $H$ |
| $w$ |
| THRESHOLD |
| $Reg$ |

~23

Fig. 13b